# EUROPÄISCHE PATENTSCHRIFT

(11) **EP 2 435 691 B1**
(45) Veröffentlichungstag und Bekanntmachung des Hinweises auf die Patenterteilung: **07.01.2015**
(21) Anmeldenummer: 10715723.2
(22) Anmeldetag: 27.04.2010
(51) Int. Cl.: F03B 13/18

(54) **ENERGIEWANDLUNGSEINRICHTUNG ZUR UMWANDLUNG VON WELLENENERGIE**
POWER CONVERTING DEVICE FOR CONVERTING WAVE ENERGY
INSTALLATION DE CONVERSION D'ÉNERGIE POUR LA CONVERSION DE L'ÉNERGIE DES VAGUES

(30) Priorität: 26.05.2009 DE 102009022735; 03.08.2009 DE 102009035928
(43) Veröffentlichungstag der Anmeldung: 04.04.2012
(73) Patentinhaber: Robert Bosch GmbH, 70469 Stuttgart (DE)
(72) Erfinder: SCHARMANN, Nik, 74321 Bietigheim-Bissingen (DE); HAGEMANN, Benjamin, 70839 Gerungen (DE)
(74) Vertreter: Thürer, Andreas
(86) Internationale Anmeldenummer: PCT/EP2010/002577
(87) Internationale Veröffentlichungsnummer: WO 2010/136100

(56) Entgegenhaltungen:
- WO-A1-2008/111849
- WO-A2-2007/077555
- FR-A1- 2 858 667
- GB-A- 2 119 449
- GB-A- 2 425 154
- US-A1- 2009 056 327

## Beschreibung

Die Erfindung betrifft eine Umwandlungseinrichtung zur Umwandlung von Wellenenergie. Es sind eine Vielzahl von Energieumwandlungsvornchtungen für Wellenenergie im Stand der Technik bekannt. Diese können nach ihrem Einsatzort unterschieden werden, je nachdem, ob sie auf hoher See, in Küstennähe oder an der Küste angeordnet sind. Eine andere Unterscheidung bezieht sich darauf, wie die Energie aus der Wellenbewegung entnommen wird. Beispielsweise schwimmen Bojen auf der Wasseroberfläche, so dass durch Heben und Senken des Schwimmkörper beispielsweise ein Lineargenerator angetrieben wird. Bei einem anderen Anlagenkonzept. dem sogenannten "Wave Roller" wird auf dem Meeresboden ein Flügel aufgebraucht, der aufgrund der Bewegung der Wassermoleküle hin und her gekippt wird. Die Bewegungsenergie des Flügels wird in einem Generator beispielsweise in elektrische Energie umgewandelt. Eine Übersicht über Wellenenergiekraftwerke ist in dem Buch "Renewable Energie" von Godfrey Boyle gezeigt.

Die GB 2425154 A zeigt eine gattungsgemaße Energiewandlungseinrichtung für Wellen in Gewässern. Ein Haltemast ist unterhalb der Wasseroberfläche mit einem Ausleger versehen, der schräg vom Haltemast absteht. Am Ausleger ist ein Generator befestigt. dessen welle mit einem Arm versehen ist. An dem Arm ist ein tonnenrörmiger Körper angebracht, der von den Wellen in Bewegung versetzt wird. Der Arm überträgt die Bewegung des tonnenformigen Körpers auf den Generator.

Den im Stand der Technik bekannten Anlagen ist gemein, dass sie nur einen kleinen Teil der in einer Welle vorhandenen Energie umwandeln können.

Es ist somit Aufgabe der Erfindung, eine Energiewandfungseinrichtung bereitzustellen, die einen größeren Wirkungsgrad als im Stand der Technik bekannte Anlagen hat.

Diese Aufgabe wird mit dem Gegenstand des unabhängigen Patentanspruchs gelöst. Vorteilhafte Weiterbildungen ergeben sich aus den Unteransprüchen.

Die Erfindung betrifft eine Energiewandlungseinrichtung zur Umwandlung von Energie zwischen einer Wellenbewegung in einem Fluid und einer anderen Energieform. Die Energiewandlungseinrichtung umfasst mindestens einen im Fluid angeordneten Kopplungskörper. Dieser Kopplungskörper ist dazu eingerichtet an zumindest eine Komponente einer Orbitalströmungsbewegung, die einer Wellenbewegung des Fluids zugeordnet ist, zu koppeln. Die Energiewandlungseinrichtung umfasst zudem eine Führungseinrichtung, die eine geführte, endlos umlaufende Orbitalbewegung und/oder Drehbewegung des mindestens einen Kopplungskörpers vorgibt. Die Führungseinrichtung weist einen Abtrieb auf, an dem die Führungseinrichtung die Umlaufbewegung und/oder die Drehbewegung in ein Drehmoment umsetzt.

Erfindungsgemäß umfasst die Führungseinrichtung eine Kurbel, welche den Kopplungskörper um die Bewegungsachse führt.

Dabei ist der Kopplungskörper drehbar auf der Führungseinrichtung gelagert Somit ist gewährleistet, dass der Kopplungskörper vollständige Umlaufbewegungen bzw. Umdrehungen um die Führungseinrichtung durchführen kann.

Die Energiewandlungseinrichtung ermöglicht, die Energie der Welle möglichst effizient in die andere Energieform zu wandeln. Dies wird durch den Kopplungskörper in Zusammenhang mit der Führungseinrichtung ermöglicht die dafür sorgen, dass an eine Komponente der Orbitalströmungsbewegung gekoppelt wird und die Bewegung auf einer bestimmten Bahn gehalten wird. Somit wird die kinetische Energie der Orbitalbewegung genutzt.

Falls der Körper und die Führungseinrichtung konstruktiv so gestaltet sind, dass im Verlauf einer Periode der Wellenbewegung der Körper im Wesentlichen einen vollstandigen Umlauf der Orbitatbewegung und/oder Drehbewegung ausführt, kann Energie während der gesamten Orbitalbewegung, und nicht nur in begrenzten Zeiträumen, aus der Welle gewonnen werden. Dies hat zudem den Vorteil, dass die Erzeugung der Energie der anderen Energieform gleichmäßig erfolgt. Es brauchen deshalb keine Energiespeicher vorgesehen zu werden, um eine konstante Leistung zu erzeugen.

In einer bevorzugten Ausführungsform umfasst der Abtrieb eine Abtriebswelle, an der sich eine Energiewandlungsmaschine befindet. Diese kann enthalten: Pumpen, Motoren, mechanische Getriebe, hydrostatische Getriebe, hydrodynamische Getriebe, elektroaktive Polymere insbesondere dielektrische Elastomere, Ferroelektrika, Piezoelektrika, elektrische Generatoren, Mit geeigneten Kombinationen der genannten Elemente kann hydraulische, pneumatische, potentielle, chemische (z. B Wasserstoff), elektrische Energie gewandelt werden. Vorzugsweise ist dabei die Last durch den Energiewandler. z.B. Generator, anpassbar. Dabei erfolgt die Anpassung der Last in Abhängigkeit von der jeweils einlaufenden Welle. Dabei wird die Anpassung der Last zur phasenrichtigen Ausrichtung der Energiewandlungseinnchtungen relativ zur Welle genutzt.

Vorzugsweise führt die Führungseinrichtung die Umlaufbewegung und/oder die Drehbewegung um eine im Wesentlichen horizontal ausgerichtete Bewegungsachse aus. Damit wird die Energie der Orbitalbewegung möglichst gut ausgenutzt, da sie ebenfalls um horizontale Achsen erfolgt.

In einer bevorzugten Ausführungsform besitzt bzw. besitzen der Kopplungskörper und/oder die Führungseinrichtung bei einer vorgegebenen Umlaufstellung ihre räumliche hauptsächliche Ausdehnung im Wesentlichen auf einer Seite einer Ebene, in der die Bewegungsachse herläuft. Dabei ist bzw. ist der Kopplungskörper und/oder die Führungseinrichtung insbesondere exzentrisch bezüglich der Bewegungsachse gestaltet Durch die dadurch gebildete Achsen-Asymmetrie wird dafür gesorgt, dass Wassermoleküle im Wesentlichen nur auf der Seite, auf der die größere Ausdehnung ist, Kräfte ausüben. Dadurch wird die Umlaufbewegung oder Drehbewegung erzwungen.

Mit einer derartigen Energiewandlungseinrichtung ist es möglich, die Wellenenergie besonders effizient zu nutzen. Dies ist in der Bewegung der Wassermoleküle begründet. Wassermoleküle, die sich unterhalb der Wasseroberfläche befinden, bewegen sich aufgrund der Wellenbewegung auf einer so genannten Orbitalbahn. An folgendem Beispiel wird dies verdeutlicht. An einem bestimmten Ort befindet sich der Wasserspiegel zuerst im Maximum, bevor er sinkt, den Nulldurchgang durchschreitet, um anschließend ein Minimum zu erreichen. Anschließend steigt der Wasserspiegel an, durchschreitet wiederum den Nulldurchgang, um wieder beim Maximum zu landen. Danach beginnt die Bewegung erneut.

Wenn sich die Welle im Maximum befindet, bewegen sich sämtliche Wasser moleküle, die sich unterhalb des Maximums befinden, in der Ausbreitungsrichtung der Welle. Bei einer nach rechts wandernden Wellenfront also nach rechts. Beim anschließenden Nuldurchgang bewegen sich diese Wassermoleküle nach unten. Dagegen bewegen sie sich während des Minimums der Welle nach links. Bei dem nächsten Nulldurchgang bewegen sich die Wassermoleküle alle nach oben, wonach sie ab dem Maximum die beschriebene Bewegung wieder beginnen. Es versteht sich, dass die Wassermoleküle sich kontinuierlich in einer Kreisbewegung bewegen, während hier nur vier diskrete Punkte dieser Kreisbewegung beispielhaft genannt wurden. Der Durchmesser dieser Kreisbewegung nimmt mit zunehmender Wassertiefe ab, so dass ab einer Wassertiefe von der Hälfte der Wellenlänge nahezu keine Orbitalbewegung mehr vorhanden ist. In flachem Wasser bewegen sich die Wassermoleküle dagegen nicht mehr auf einer Kreisbahn, sondern auf ellipsenförmigen Bahnen.

Würde der Kopplungskörper achsensymmetrisch um die erste Achse geordnet werden, fürden die Wassermoleküle, die ledigifch eine Orbitalbewegung ausführen, gleichmäßig auf den ersten Körper drucken, so dass eine Kraft auf der einen Seite des ersten Körpers durch eine Kraft auf der anderen Seite des ersten Körpers aufgehoben wird. Aufgrund der Unsymmetrie wirkt die Kraft auf einer Seite der Achse stärker als auf einer anderen Seite, wodurch ein Drehmoment auf den Körper erzeugt wird. Dadurch kann der erste Körper allein durch die Orbitalbewegung der Wassermoleküle in Bewegung gesetzt werden, ohne dass es einer Strömungsbewegung zusätzlich zur Orbitalbewegung bedarf, wie dies bei Strömungskraftwerken der Fall ist.

Wenn der Kopplungskörper vollständige Umdrehungen um die Achse durchführen kann, kann kontinuierlich Energie erzeugt werden. Dies hat den Vorteil, dass die Energieerzeugung effektiv ist, da während der gesamten Bewegung Energie umgewandelt wird. Dies hat zudem den Vorteil, dass aufgrund der kontinuierlichen Erzeugung der Energie keine Spitzenwerte der Energie der anderen Energieform geglättet werden müssen, wie dies beispielsweise bei dem "Wave Roller" der Fall ist.

In einer weiteren Ausführungsform umfasst ein Hebelarm des Kurbelgetriebes eine Längenverstelteinrichtung, durch welche der Hebelarm in seiner wirksamen Länge verstellbar ist. Die Ausdehnung der Orbitalbewegungen hängen unter anderem von der Wellenhöhe und von dem Abstand der Wassermolekule von der Wasseroberfläche ab. Durch die Verstellbarkeit kann der Radius der Umlaufbewegung bzw. Drehbewegung an die aktuell herrschenden Bedingunger, d.h. Ausdehnungen der Orbitalbewegungen angepasst werden.

Die Längenverstelleinrichtung kann eine Linearführung und/oder einen Hydrozylinder und/oder einen Spindeltrieb und/oder einen im Wesentlichen parallel zur Bewegungsachse angeordneten mit einem Drehantrieb versehenen Rotationskörper und/oder eine Blockiereinrichtung umfassen. Hydrozylinder können beispielsweise besonders große Kräfte aufnehmern. Beim Rotationskörper beruht die Kraftwirkung entlang des Hebelarmes auf dem Magnus-Effekt, der Rotationskörper kann auch der Kopplungskörper sein.

Vorzugsweise ist eine Steuerung vorgesehen mit der die Länge des Hebelarms an eine räumliche Ausdehnung der Orbitalströmungsbewegung im Fluid anpassbar und/oder mit welcher die Länge des Hebelarms während des Umlaufs an eine Bahnform der Orbitalströmungsbewegung im Fluid - insbesondere eine Elliplizität - anpassbar ist. Besonders in flachem Wasser ähnein die Orbitale flach gedrückten Kreisen. Hier ist es besonders sinnvoll, während des Umlaufs die Länge des Hebelarms zu variieren. So kann z.B. in der horizontallen Stellung der Hebelarm kürzer als in der vertikalen Stellung sein.

Eine Ausrichtevorrichtung kann den Kopplungskörper in einer vorgegebenen Winkellage seiner Drehachse in einem ortsfesten Koordinatensystems ausrichten. Damit kann verhindert werden, dass neben der Umlauf- bzw. Drehbewegung der Kopplungskörper weitere Bewegungen durchführt, die die Verlustleistung der Energiewandlungseinrichtung erhöhen. Beispielhafte Ausfuhrungsformen sind dabei Zylinder, die teilweise mit Balfast gefüllt sind und durch die Schwerkraft die vorgegebene Wickellage erzwingen, sowie mechanische Bauteile, die weitere Komponenten der Energiewandlungseinrichtung sind.

Beispielsweise wird bei ersten Ausführungsformen mit nur einer Achse die Größe des Kopplungskörpers durch den Radius der Orbitalbewegung der Wassermoleküle begrenzet. Würde der maximale Achsabstand des ersten Körpers größer als der lokale Radius der Orbitalbewegung der Wassermolekülbewegung, würde sich dieser Bereich des ersten Körpers schneller bewegen, als die Wassermoleküle, was zu einem Energieabfluss aus dem System führen würde. Dadurch würde die Effizienz der Anlage sinken.

Durch die Drehung um eine zweite Achse kann der Punkt, der maximal von der ersten Achse entfernt ist, eine Gegenbewegung vornehmen, wodurch der beschriebene Effekt verhindert wird. Damit ist es möglich, die Abmessungen des ersten Kopplungskorpers deutlich zu vergrößern, was zu einer vergrößerten Energiewandlung führt, Diese Gegenbewegung kann über beispielsweise einen Kurbeltrieb oder die Verschiebung des Schwerpunktes des ersten Körpers retativ zu der zweiten Achse erreicht werden.

In einer Ausführungsform besitzt der Kopplungskörper im Wesentlichen einen längliche, sich horizontal erstreckenden flächigen, insbesondere rechteckigen, Aufriss, welcher insbesondere Strukturen zur Ausrichtung im Sinne eines hohen Strömungswiderstandes aufwetst. Es sind dabei auch brettförmig Kopplungskörper, gekreuzte Bretter als Kopplungskörper usw. möglich. Mit einem solchen Aufriss wird den Wassermolekülen eine hohe Angriffsfläche geboten. Der Kopplungskörper sollte dabei einen möglichst hohen Strömungswiderstand aufweisen, z.B. auch durch eine raue Oberfläche.

In eine der alternativen Ausführungsformen besitzt der Kopplungskörper im Wesentlichen die Form eines länglichen Zylinders. Ein solcher ist besonders stabil, was vorteilhaft für die Lebensdauer der Energiewandlungseinrichtung ist.

Der Kopplungskörper kann nach Art eines senkrecht zu seiner Drehachse angeströmten Rotors, und/oder nach Art eines Rotors, der eine senkrecht zu seiner Drehachse ausgerichtete Anströmung unabhängig vom Anströmungswinkel in Rotationsbewegung umsetzt, gestaltet sein, Dadurch kann zusätzlich Energie, die sich aus Strömungen der Wassermolekülen ergibt, genutzt werden.

In weiteren erfindungsgemäßen Ausführungsformen sind auf einer horizontal orientierten Achse ein oder mehrere Rotoren angebracht, die unabhängig von der Anströmungsrichtung in eine Drehung versetzt werden. Derartige Rotoren werden in Turbinen verwendet werden, die unabhängig von der Richtung der Anströmung eine Drehung erzeugen und typischerweise zur Energiewandlung in Strömungen von Fluiden (Wind, Tidenhub, Flüsse) eingesetzt. Hierzu gehören beispielsweise Rotoren wie Darrieus, Savonius, kombinierter Savonius Darrieus, Gorlov, Banki, Anemometer und ähnliche, Die genannten Rotoren erzeugen unabhängig von der Anströrrtungsrichtung ein Drehmoment.

In einer Ausführungsform werden die Rotoren mit einer horizontal angeordneten Achse zur Wandlung der Energie von Weller eingesetzt. Hier herrscht im Gegensatz zum traditioneilen Einsatz keine Strömung. Die Orbitaibewegung der Wassermoleküle führt jedoch ebenfalls zu einer Drehung der genannten Rotoren, die mit Hilfe von Generatoren in andere Energieformen gewandelt werden kann.

Der Rotor kann zu der Klasse der Widerstandstläufer, der Auftriebsläufer und/oder einer Kombination der beiden gehören. Auftriebsläufer können die Strömungsenergie besonders gut nutzen, während der Aufbau von Widerstandläufern in der Regel einfacher ist.

In einer weiteren Ausführungsform sind die angeführten Rotoren, die typischerweise mindestens zwei "Flügel" enthalten zu "Einflügeln" reduziert. Aufgrund der ständig wechselnden Richtung der Orbitalbewegung wird auch mit nur einem Flügel eine kontinuierliche Drehung sichergestellt. Damit lassen sich derartige Rotoren auch wieder auf die erste Ausführungform mit nur einer Achse und einer unsymmetrischen Lagerung zurückführen.

Ein Kopplungskörper, der als einflügeliger Rotor gestaltet ist, zeigt besonders gut die Achsen-Unsymmtrie, wodurch sich der Kopplungskörper sehr effektiv von den Wassermolekulen in Bewegung gesetzt werden kann

In einer weiteren Ausführungsform besteht der erste Körper aus einem Zylinder und einem aus der Außenseite des Zylinders herausragenden Flügel. Der Zylinder ist im Wesentlichen achsensymmetrisch um die erste Achse/Welle gelagert bzw. auf dieser angeordnet. Somit ist der erste Körper insgesamt achsen-unsymmetrisch um die erste Achse/Welle angeordnet, da die Ausbuchtung aus dem Zylinder für eine Asymmetrie sorgt. Durch einen derartigen Flügel wird den Wassermolekülen eine große Angriffsfläche geboten.

Falls die maximale radiale Ausdehnung des Rotors in etwa einem Radius der Orbitalströmungsbewegung im Fluid am Standort der Energiewandungseinrichtung entspricht oder kleiner als der besagte Radius ist, wird verhindert, dass ein Teil des Rotors, und zwar der, der außerhalb des Radius liegt, von den Wassermolekülen abgebremst wird.

Falls der Kopplungskörper im Wesentlichen die gleiche Dichte wie das Fluid besitzt, wirken keine zusätzlichen Auftriebskräfte, die den Bewegungsverlauf des Kuppelkörpers unsymmetrischer machen.

Mithilfe einer Trägerstruktur, an welcher sich die Führungseinrichtung abstützt, kann für eine möglichst gute Fixierung in Bezug auf das unbewegte Koordinatensystem gesorgt werden. Unter unbewegtem Koordinatensystem wird das Koordinatensystem verstanden, in dem der Meeresboden sich nicht bewegt.

Dabei ist die Trägerstruktur in einer Ausführungsform am Meeresboden, insbesondere über eine Dämpfungseinrichtung, verankert. Damit wird die Position der Energiewandlungseinrichtung unmittelbar vorgegeben. Diese Art der Verankerung bietet sich besonders in Küstennähe an.

In einer weiteren Ausführungsform besitzt die Trägerstruktur Auftriebskörper, durch welche die Trägerstruktur schwimmfähig ist. Insbesondere ist dabei die Trägerstruktur nach Art eines Slack Moorings verankert. Damit kann die Trägerstruktur fixiert werden, ohne dass hohe Kräfte auf die Verankerung wirken, was auf Dauer die Trägerstruktur oder die Verankerung schädigen kann. Die Trägerstruktur kann gemäß der Ausführungsformen fest mit dem Meeresboden verbunden sein, auf der Wasseroberfläche schwimmen, wobei entsprechende Halterungen in das Wasser hineinragen. Zudem kann die Trägerstruktur unterhalb der Wasseroberfläche schwimmen.

Falls die Trägerstruktur und/oder eine Haltevorrichtung der Führungseinrichtung an der Trägerstruktur hinsichtlich einer Eintauschtiefe verstellbar sind, kann die Eintauchtiefe u.a. von der Wellenhöhe abhängig gemacht werden, so dass die erzeugte Leistung auch bei unterschiedlichen Wellenhöhen konstant bleibt. Unter Haltevorrichtung wird dabe die Aufhängung einer einzelnen Rührung bzw. eines einzelnen Hebels an einer größeren Trägerstruktur verstanden.

Falls die Trägerstruktur eine entsprechend große Ausdehnung aufweist, führen die über die Anlage verteilten Kräfte mit unterschiedlicher Wirkrichtung dazu, dass die Trägerstruktur weitgehend ruhig im Wasser liegt. Dadurch können sich die Führungeinrichtungen der Kopplungskörper an dieser abstützen.

Die Länge der Trägerstruktur beträgt mindestens ¾ einer Wellenlänge typischer Meereswellen. Aus Gesichtspunkten einer möglichst ruhigen Lage der Trägerstruktur im Wasser ist sogar eine Länge von etwa 2 Wellenlängen typischer Meereswellen anzustreben. Daher werden Längen zwischen 20 bis 1000 m, vorzugsweise zwischen 50 und 600 m, besonders bevorzugt zwischen 80 und 360 m. vorgeschlagen.

Dabei werden beispielsweise mehrere Kopplungskörper linear hintereinander, insbesondere parallel, angeordnet und/oder mehrere Kopplungskörper sind im Wesentlichen parallel mit seitlichem Versatz bezüglich ihrer Längsachse oder Bewegungsachse, insbesondere in Dreiecksformation. Dretecksflächenformation oder in V-Formation angeordnet. Durch die parallele Anordnung werden die Kopplungskörper im gleichen Winkel von der Welle erfasst.

Falls an der Trägerstruktur eine Einrichtung vorhanden ist, welche einen Energieertrag mehrerer Kopplungskörper ausgangsseitig zusammenfasst, wird vorteilhafterweise die Anzahl der Komponenten verringert.

In einer Ausführungsform ist die Trägerstruktur über eine passive oder aktive Azimuthausrichteanordnung, wie im Turm einer Windkraftanlage, entlang einer Wellenrichtung ausrichtbar Die Azimuthausrichteanordnung kann Getriebe und Motoren aufweisen, die dafür sorgen, dass die Energiewandlungseinrichtungen möglichst vollständig von der Welle erfasst werden. Ist die Trägerstruktur in ihren Abmessungen im Wesentlichen länglich und frei drehbar um das Mooring gehaltert, so wird sich die Trägerstruktur in der Regel lagerichtig zur einlaufenden Welle ausrichten.

In einer bevorzugten Ausführungsform ist ein Abstand zwischen den Abstützpunkten mehrere Führungseinrichtungen verstellbar. Damit kann dafür gesorgt werden, dass das Phasenverhältnis der Bewegungen der Kopplungskörper auch bei unterschiedlichen Weilenausbreitungsgeschwindigkeiten bzw. Wellenlänge gleich bleibt.

Vorzugsweise wird die Wellenhöhe, die Wellenlänge und/oder die Wellenausbreitungsgeschwsndigkeit mit Hilfe eines oder mehrerer auf der Baugruppe angeordnete Drucksensoren bestimmt.

Die Wellenlänge und/oder die Wellenausbreitungsgeschwindigkeit kann mit Hilfe der relativen Phasenlage der in der Baugruppe angeordneten Energiewandlungseinrichtungen bestimmt werden.

In einer weiteren Ausführungsform werden die Wellenlänge und/oder die Wellenausbreitungsgeschwindigkeit mit Hife der relativen Phasenlage von in der Baugruppe angeordneten Zusatzrotoren bestimmt.

Falls eine Steuerung vorhanden ist, welche den Energieertrag durch eine Änderung der Eintauchtiefe steuert, kann unabhängig von der Wellenhöhe eine weitgehend konstante Abgabeleistung erreicht werden. Die Steuerung der Eintauchtiefe kann auch zum Ausgleich des Tidenhubes genutzt wird. Die Eintauchtiefe kann auch durch einstellbaren Auftrieb der Schwimmikörper gewandert werden. Wichtig ist, dass die Maschine im optimalen Betriebspunkt arbeitet, der von der Größe der Orbitalbewegung, von der Wellenhöhe und der Tauchtiefe abhängt

Die Energiewandlungseinrichtung wird in einem Fluid bevorzugt in einem Körper von Wasser in Bereichen mit Wassertiefen von 2 bis 11000 m. vorzugsweise von 50 bis 2500 m besonders bevorzugt von 80 bis 1200 m und ganz besonders bevorzugt von 100 bis 850 m eingesetzt

Die Energiewandlungseinrichtung wird dabei bevorzugt in einer Wassertiefe von kleiner oder gleich der Hälfte einer Wellenlänge am Einsatzort, bevorzugt in einer Wassertiefe von kleiner oder gleich einem Viertel der Wellenlänge am Einsatzort und ganz besonders bevorzugt in einer Wassertiefe von kleiner oder gleich einem Zehntel der Wellenlänge am Einsatzort eingesetzt. Die Energiewandlungseinrichtung ist vorzugsweise im Wesentlichen immer mit Wasser bedeckt.

Die Erfindung wird nun anhand von Ausführungsbeispielen anhand der beigefügten Figuren erläutert. Dabei zeigt:
Figur 1 bis Fig. 6 und Fig. 12 zeigen Teile einer ersten bis sechsten Ausführungsform einer Energiewandlungseinrichtung, welche nicht von der Erfindung umfasst ist aber zum besseren Verständnis der Erfindung dient,
Figur 7 Teile einer erfindungsgemäßen und siebten Ausführungsform einer Energiewandlungseinrichtung;
Figur 8 Teile einer achten Ausführungsform einer Energiewandlungseinrichtung;
Figur 9 Teile einer neunten Ausführungsform einer Energiewandlungseinrichtung,
Figur 10 Teile einer zehnten Ausführungsform einer Energiewandlungseinrichtung;
Figur 11 Teile einer elften Ausführungsform einer Energiewandlungseinrichtung;
Figur 13 eine Energiewandlungseinrichtungen 1 mit Verankerung in einer Seiteriansicht;
Figur 14 zwei Energiewandlungseinrichtungen 1 mit gemeinsamer Verankerung in einer Seitenansicht;
Figur 15 eine Baugruppe aus einer Verankerung und einer Energiewandlungseinrichtung gemäß dem achten Ausführungsbeispiel;
Figur 16 bis 19 zeigen Baugruppen aus Verankerung und einer Energiewandlungseinrichtung, welche nicht von der Erfindung umfasst sind;
Figur 20 eine erfindungsgemäße Baugruppe aus einer Aufhängung und einer Vielzahl von Energiewandlungseinrichtungen gemäß Figur 10;
Figur 21 eine Baugruppe aus einer Aufhängung und einer Vieizahl von Energiewandlungseinrichtungen gemäß Figur 9;
Figur 22 eine Aufhängung mit einer Energiewandlungseinrichtung gemäß der fünften Ausführungsform;
Figur 23 die Baugruppe aus Figur 22 in einer Seitenansicht:
Figur 24 die Baugruppe aus Figur 22 in einer weiteren Seitenansicht;
Figur 25 eine Vielzahl von zusammengefügten Aufhängungen gemäß Figur 22;
Figur 26 die Energiewandlungseinrichtung aus Figur 25 in einer Seitenansicht;
Figur 27 eine weitere alternative Anordnung von Energieumwandlungseinheiten in einer Aufhängung.

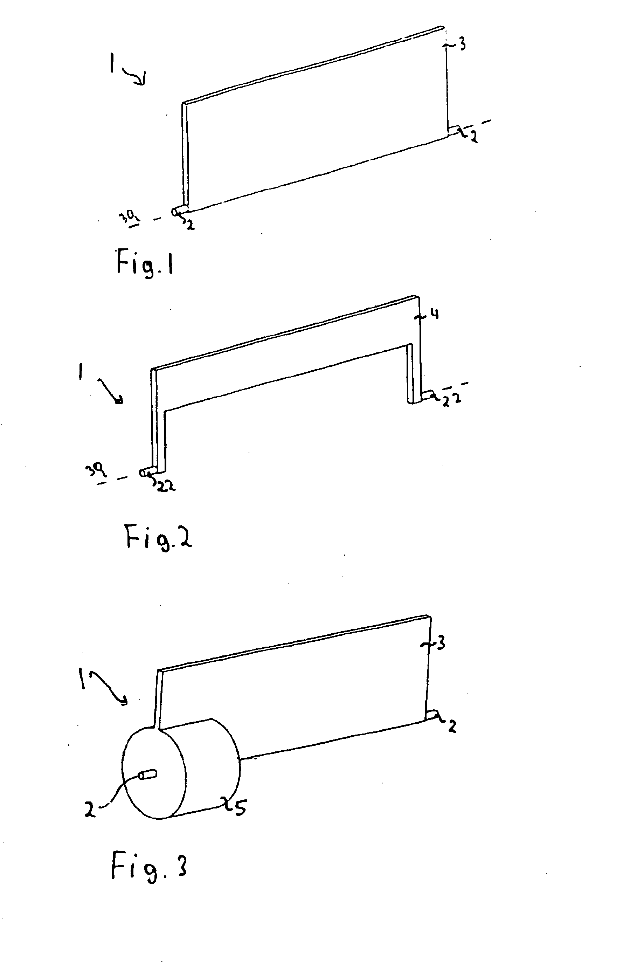

Figur 1 zeigt Teile einer ersten Ausführung einer Wellenenergiewandlungseinrichtung 1, welche nicht von der Erfindung umfasst ist, aber welche zum Verständnis der Erfindung nützlich ist. Dabei ist eine Welle 2 gezeigt, auf der ein Flügel 3 außermittig angeordnet ist. Dieser Flügel 3 ist so angeordnet, dass er sich mit der Welle 2 bewegt. Die Welle 2 ist, in Figur 1 nicht gezeigt, in einem Generator derart gelagert, so dass die Welle 2 den Rotor eines Energiewandlungssystems dreht. Die Welle 2 dreht sich somit um eine erste Achse 30, um die der Flügel 3, der achsen-unsymmetrisch zu dieser Achse 30 angeordnet ist, eine Drehbewegung durchführt Die Wassermoleküle der Meereswelle üben Kräfte auf Flügel 3 derart aus, dass ein Drehmoment den Flügel 3 und die Welle 2 zum Drehen bzw. Rotieren bringt. Der erste Körper dient in dieser Ausführungsform als Kopplungskörper und die Welle mit Lagerung ist Teil der Führungseinrichtung. Der Kopplungskörper koppelt an die Orbitalbewegung der Wassermoleküle.

Diejenigen Teile der Energleumwandlungseinheit, die die Drehbewegung ausführen, werden nachfolgend auch als erster Körper oder als Kopplungskörper bezeichnet Dies sind in dieser Ausführungsform im Wesentlichen der Flügel 3 und die Welle 2. Der erste Körper dreht sich mit jeder Wellenlänge der Meereswelle einmal vollständig um die erste Achse 30 so dass kontinuierlich Energie umgewandelt wird. Der Abtrieb erfolgt in dem Rotor des Generators

Auch die Figuren 2 bis 6 und Figur 12 zeigen Teile von Wellenenergiewandlungseinrichtungen 1, welche zum Verständnis der Erfindung nützlich sind.

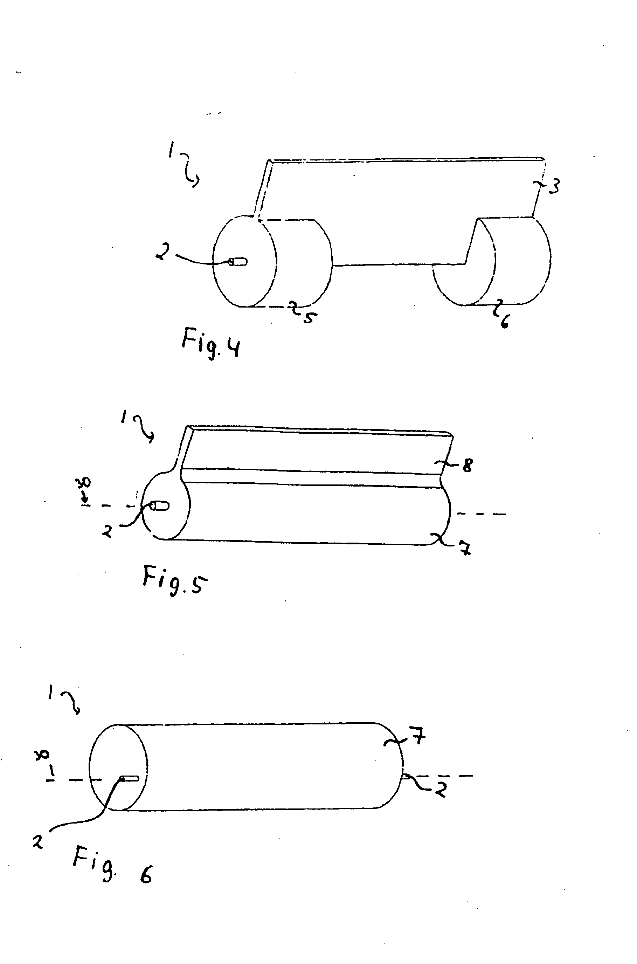

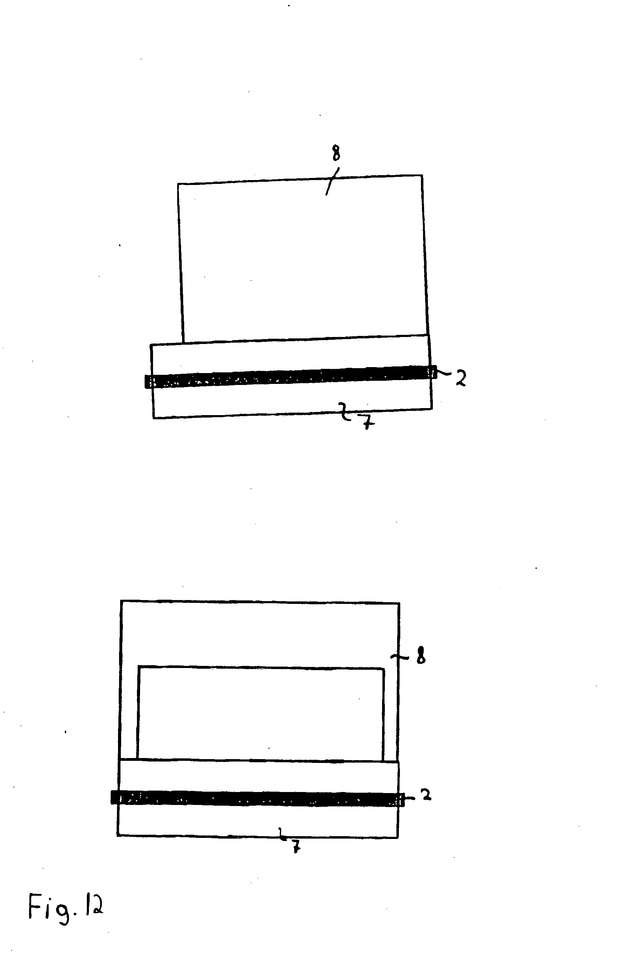

Figur 12 zeigt zwei alternative Energiewandlungseinrichtungen 1, die Abwandlungen der Ausführungsform nach Fig. 5 sind. Im Vergleich zu dem Beispiel aus Figur 5 sind Teile des Flügels 8 ausgespart.

Den Ausführungsformen gemäß Fig. 1 bis 6 ist gemein, dass ein Körper durch die Orbitalbewegung von Wassermolekülen in eine Rotation um eine weitgehend ortsfeste Achse 30 versetzt wird.

Hierbei kann der erste Körper, wie in den Ausführungsformen 1 bis 6 beschrieben, fest auf der Welle 2 montiert sein. Diese muss dann drehbar in einem Gehäuse gelagert sein. Dabei erfolgt der Angriff des Drehmoments an der rotierenden Welle 2.

Alternativ kann der erste Körper jedoch auch drehbar auf der Welle 2 gelagert sein, die dann als Achse 2 bezeichnet wird. Die Achse 2 ist fest mit einem Gehäuse verbunden ist, der erste Körper rotiert um die feststehende Achse 2. In diesem Fall können Triebstrang, Getriebe, Generator usw. teilweise im Inneren des ersten Körpers oder an der Außenseite des ersten Körpers angeordnet werden. Dies ist besonders vorteilhaft möglich bei Konfigurationen, die einen entsprechenden Raum im Inneren des ersten Körpers bieten. Hierzu gehören insbesondere die Ausführungsformen nach Figuren 3 bis 6.

Bei den hier gezeigten Figuren 1 bis 6 wurde der Einfachheit halber nur der erste Körper mit der Welle 2 bzw. mit den Wellenzapfen 22 gezeigt. Es versteht sich, dass die Welle 2 und die Wellenzapfen 22 jeweils in einem Gehäuse gelagert sind bzw. mit einem Gehäuse fest verbunden sind. Generator und Triebstrang wurden ebenfalls in den Figuren nicht explizit gezeigt. Es ist allerdings einem Fachmann verständlich, wie die erzeugte Rotation mit verschiedenen Mitteln, beispielsweise hydraulischen Mitteln, einem Elektrogenerator oder elektroaktiven Polymeren in nutzbare Energieformen umgewandelt werden können.

Wichtig ist, dass das Gehäuse relativ zur Bewegung der Wellen im Wesentlichen ruhend angeordnet ist, also nicht ebenfalls durch die Orbitalbewegung der Wassermoleküle in eine Dreh- und/oder Orbitalbewegung versetzt wird. Dazu wird jeweils eine Befestigungsvorrichtung vorgesehen, mit der die Welle 2 bzw. die Achse 2 so gehaltert wind, dass sie im Wesentlichen ortsfest in Bezug auf den Meeresboden 16 ist.

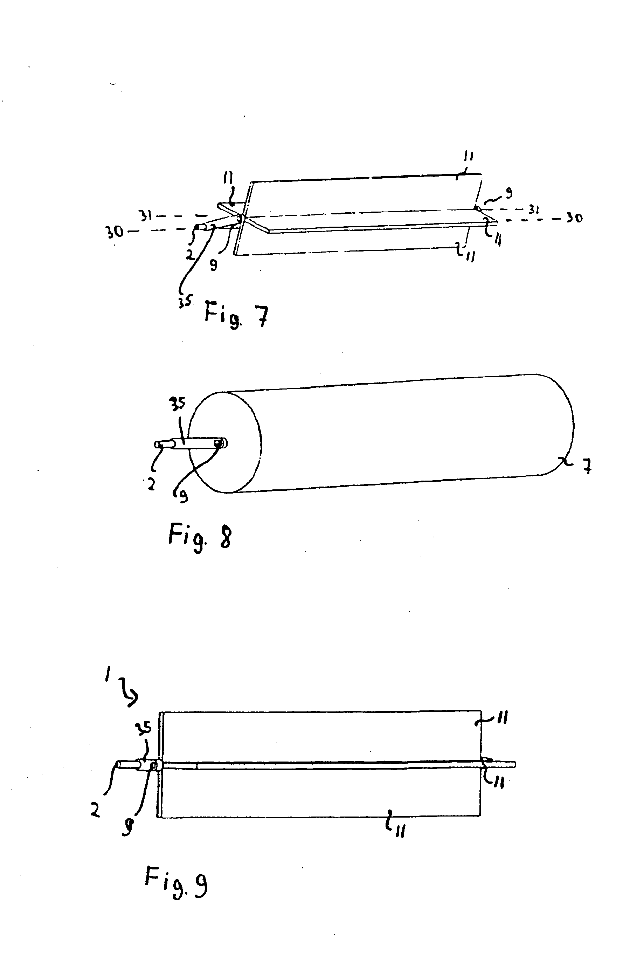

Figur 7 zeigt eine erfindungsgemäße, siebte Ausführungsform von Teilen der Energiewandlungseinrichtung 1. Bei dieser sind eine erste Welle 2 und eine zweite Welle 9 vorgesehen. Diese bilden zwei Achsen 30 bzw. 31, die im Wesentlichen parallel verlaufen Die zweite Welle 9 ist über zwei Hebelarme 35 auf der ersten Welle 2 gehaltert. Der Hebelarm 35 ist an einem Ende mit der ersten Welle 2 fest verbunden, während die zweite Welle 9 in dem Hebelarm 35 an dessen zweiten Ende drehbar gelagert ist. Alternativ kann auch die zweite Achse/Welle 9 fest mit dem Hebelarm 35 verbunden sein.

Der erste Körper ist auf der zweiten Welle 9 angeordnet und enthält vier Flügel 11, die jeweils unter einem Windel von etwa 90° zueinander orientiert sind, so dass ein Kreuz entsteht. Das Kreuz aus den vier Flügeln und der Welle 9 dreht sich somit um die zweite Achse 31. Die Wassermoleküle drücken auf die Flügel 11 und bewirken durch die ständig wechselnde Richtung aufgrund der Orbitalbewegung der Wassermoleküle eine Drehbewegung der Flügel 11, der zweiten Achse 31 und des Hebelarms 35 um die erste Achse 30.

Idealerweise drehen sich hierbei die vier Flügel nicht noch zusätzlich um die zweite Achse 31, sondern behalten ihre Orientierung bei. Durch die Orbitalbewegung werden keine Kräfte in das System induziert, die zu einer derartigen zusätzlichen Rotation führen sollte Um eine Rotation jedoch zuverlässig auszuschließen, sind zusätzliche Maßnahmen möglich, die weiter unten beschrieben werden.

Die zweite Welle 9 kann dann fest mit dem Hebelarm 35 verbunden sein, wenn der erste Körper mit den vier Flügeln 11 drehbar auf der zweiten Welle 9 gelagert ist. Alternativ sind eine drehbare Lagerung der zweiten Welle 9 am Hebelarm und ein fester Verbund des ersten Körpers auf der zweiten Achse/Welle 9 vorgesehen.

Bei den in den Figuren 1 bis 6 vorgestellten Energiewandlungseinrichtungen besteht das Problem, dass der Durchmesser des ersten Körpers begrenzt ist. Dieses Problem wird bei der Energiewandlungseinrichtung nach Figur 7 aufgehoben, da die Flügel 11 aufgrund der Anordnung mit Hebelarm 35 und zweiter Achse/Welle 9 keine Relativbewegung zu den Wassermolekülen vollführen, wie dies bei dem einachsigen System gemäß den Figuren 1 bis 6 durch die reine Drehbewegung der Fall ist.

Die in Figur 8 dargestellte achte Ausführungsform unterscheidet sich von Figur 7 dadurch, dass als erstem Körper statt der Flügel 11 ein Zylinder 7 vorgesehen ist, der achsensymmetrisch zur zweiten Achse 31 an der zweiten Welle 9 befestigt oder drehbar auf dieser gelagert ist.

Gemäß der achten Ausführungsform ist der Zylinder drehbar auf dem Hebelarm 35 gelagert, so dass sich neben der Kreisbahn um die Achse 30 keine rotierende Relativbewegung des Zylinders 7 zu den Wasserpartikeln ergibt.

Wenn der Zylinder 7 drehbar auf der zweiten Achse/Welle 9 gelagert ist, dann muss er nicht notwendigerweise achsensymmetrisch zur Welle 9 sein. Er würde sich bei nicht achsensymmetrischer Anordnung immer so ausrichten, dass er gegenüber den Wassermolekülen den geringsten Strömungswiderstand bietet, würde dabei zwar um die Achse/Welle 9 rotieren, aber auch zu einer Rotation des Gesamtsystems führen.

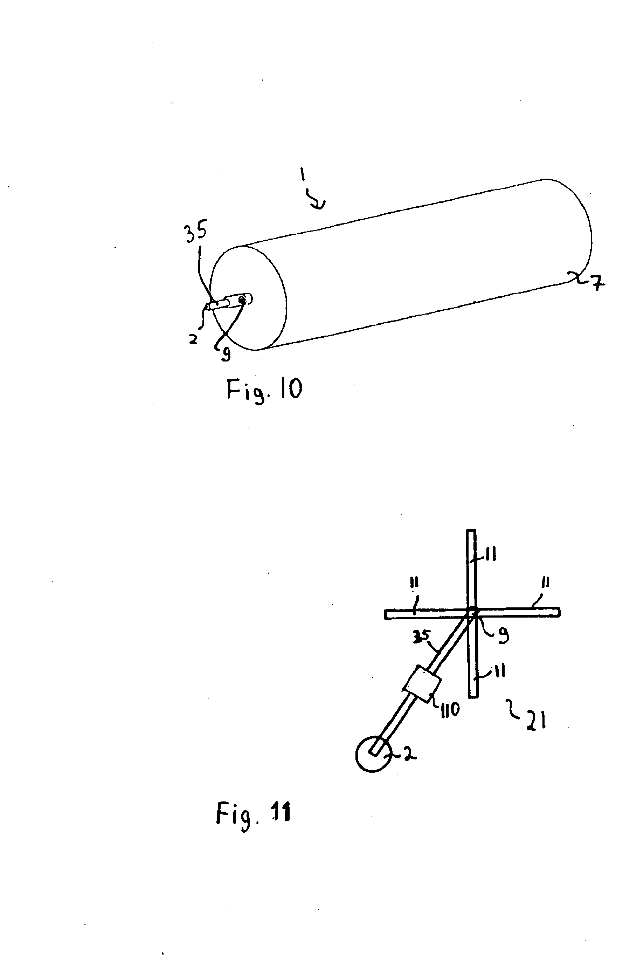

In den Ausführungsformen sieben und acht sowie den nachfolgend in Zusammenhang mit den Figuren bis Figur 11 beschriebenen Ausführungsbeispielen kann es von Vorteil sein, wenn der Zylinder nur um die erste Achse 30 orbitiert, sich aber nicht um die zweite Achse 31, bezogen auf das Bezugssystem des Meeresbodens bzw. der ersten Achse 30, dreht, um eine zusätzliche Relativbewegung des Körpers gegenüber den umgebenden Wassermolekülen aufzuschließen. Bei achsensymmetrischen Körper wird durch die Orbitalbewegung der Wassermoleküle kein Drehmoment induziert, was zu einer derartigen Drehung führen sollte.

Um jedoch eventuell vorhandene Lagerreibung oder andere Effekte auszugleichen sind verschiedene Lösungsansätze denkbar. Ein solcher Lösungsansatz ist der Einsatz eines einfachen Getriebesystems, bei dem beispielsweise ein Zahnrad fest am Gehäuse angeordnet ist. Am Hebelarm 35 ist ein Zwischenrad angeordnet und treibt ein am ersten Körper angeordnetes Zahnrad mit Übersetzungsverhältnis 1:1 zum ersten Zahnrad an. Dadurch wird sichergestellt, dass der Körper unabhängig von seiner Position entlang der Kreisbahn immer die gleiche Orientierung im unbewegten Referenzkoordinatensystem besitzt. Somit wird ein erster Körper durch die Bewegung der Wassermoleküle und durch entsprechende Hebelarme auf eine Kreisbahn gezwungen, ohne dabei um seine eigene Achse zu rotieren.

Alternativ können auch ein Gestänge, ein am ersten Körper gelagerter Motor oder mit den Drehachsen verbundener Zahnriemen eingesetzt werden.

Eine weitere Lösung ist die Nutzung der Schwerkraft, indem die Gewichtsverteilung des Zylinders in Umfangsrichtung unsymmetrisch gewählt wird, die Schwerachse also von der Mittelachse abweicht. Dies kann beispielsweise dadurch erreicht werden, dass der zylindrische Körper 7 nur teilweise z.B. mit Beton oder Sand gefüllt wird. Dadurch dreht sich der Zylinder 7 nicht um seine eigene Achse, sondern behält seine Orientierung bei. Dieser Ansatz ist besonders vorteilhaft, weil er ohne zusätzliche bewegte Teile auskommt, was sich sowohl in Bezug auf die Herstellungskosten als auch in Bezug auf die Lebensdauer positiv auswirkt.

Alternativ ist vorgesehen, dass der erste Körper der Ausführungen sieben und acht frei drehbar an den Hebelarmen 35 oder auf der zweiten Achse 31 gelagert ist, so dass sich im Betrieb unter Umständen ein Zwischenzustand zur den beiden Extremfällen keine Eigenrotation und erzwungene Eigenrotaiton ergibt.

In weiteren Ausführungsformen sind auch Systeme möglich, bei denen der Durchmesser des ersten Körpers größer ist als die Länge der Hebelarme 35. Dies zeigt z. B. in Figur 9 die neunte Ausführungsform, bei der ein kurzer Hebelarm 35 vorgesehen ist, dessen Länge kleiner als die Länge der Flügel 11 ist.

Das in Figur 10 gezeigte zehnte Ausführungsbeispiel entspricht dem achten Ausführungsbeispiel mit dem Unterschied, dass hier die Länge des Hebelarms 35 kürzer als der Radius des Zylinders 7 ist. Zusätzlich kann der Zylinder 7 durch eine geeignete Vorrichtung in Rotation versetzt werden, um den Magnus Effekt nutzen zu können.

Generell lässt sich sagen, dass die Körperform des ersten Körpers relativ frei wählbar ist. Solange sichergestellt ist, dass in alle Richtungen eine vergleichbare Kraft übertragen werden kann, erzeugt der erste Körper gleichmäßig Leistung. Alternativ kann auch eine gleichmäßige Leistungsabgabe erreicht werden, wenn der erste Körper zwar nicht in allen Richtungen eine vergleichbare Kraft übertragen kann, der erste Körper sich jedoch frei zur Anströmung ausrichten kann. Dies wird durch eine entsprechend drehbare Lagerung des ersten Körpers erreicht. In diesem Fall stellt sich der Körper immer entsprechend der wechselnden Anströmung so zur Anströmung, dass er einen geringsten Strömungswiderstand bietet nach dem Prinzip einer Wetterfahne.

Zylinderförmige Körper werden auch bei dem so genannten "Bristol Cylinder" verwendet, der im Jahr 1979 von Evans vorgeschlagen wurden. Bei diesem wird die Kreisbewegung eines Zylinders durch auf dem Meeresgrund verankerte Hydraulikzylinder in Energie gewandelt. Allerdings ist hier nachteilig, dass nur während kurzer Phasen der Drehbewegung Energie in den Hydraulikzylindern erzeugt wird und der Energieausstoß stark periodisch erfolgt was die Weiterverarbeitung der Energie in darauf folgenden Stufen erschwert.

Bei den erfindungsgemäßen Energiewandlungseinrichtungen 1 ergibt sich im Gegensatz hierzu eine kontinuierliche und im Wesentlichen konstante Energiewandlung aus der Orbitalbewegung der Wassermoleküle.

Figur 11 zeigt eine Seitenansicht in Richtung der ersten Achse 30 für die siebente Ausführungsform. Dabei ist der in Form eines Kreuzes ausgeprägte erste Körper drehbar an dem Hebelarm 35 gelagert.

Teil des Hebelarms ist ein Verstellsystem 110, das als einstellbare Verlängerungsvorrichtung dient. Das Verstellsystem kann beispielsweise als Hydraulikmotor oder als Spindeltrieb ausgestaltet sein. Mit Hilfe des Verstellsystems 110 kann die Länge des Hebelarmes 35 aktiv verändert werden. Damit kann der Abstand zwischen erster Welse 2 und zweiter Welle 9 je nach Wellenhöhe vergrößert oder verkleinert werden. Das Verstellsystem 110 wird durch eine nicht gezeigte Steuervorrichtung angesteuert.

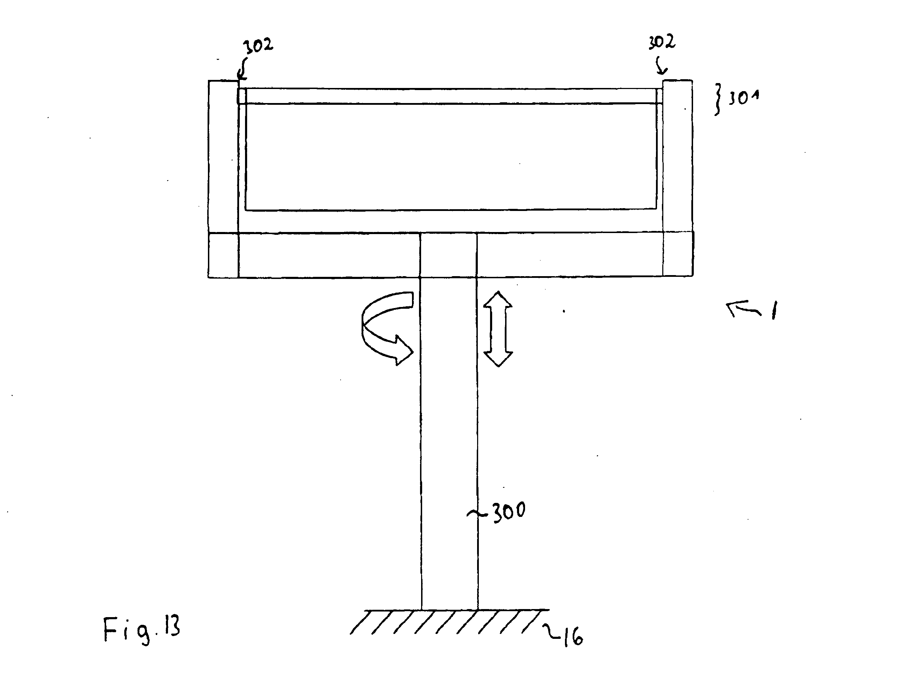

In Figur 13 ist eine erfindungsgemäße Anordnung einer Energiewandlungseinheit 1 an einer Halterungseinrichtung 300 dargestellt. Die Halterungseinrichtung 300 ist pfahlförmig ausgestaltet und starr am Meeresboden 16 verankert. Am oberen Ende 301 der Halterungseinheit 300 ist eine beidseitige Lagerung 302 für eine Energiewandlungseinheit 1 gemäß der ersten Ausführungsform dargestellt, wobei hier auch alle anderen beschriebenen ein- und zweiachsigen Systeme eingesetzt werden könnten. Die Halterungseinrichtung 300 kann höhenverstellbar sein und durch eine Rotation um die vertikale Achse eine optimale Ausrichtung der Energiewandlungseinheit zur anströmenden Meereswelle gewährleisten. Ein Generator, eine Pumpe und/oder ein möglicherweise vorhandenes Getriebe zur Wandlung des Drehmoments in eine andere Energieform sind vorgesehen, aber in der Figur nicht dargestellt.

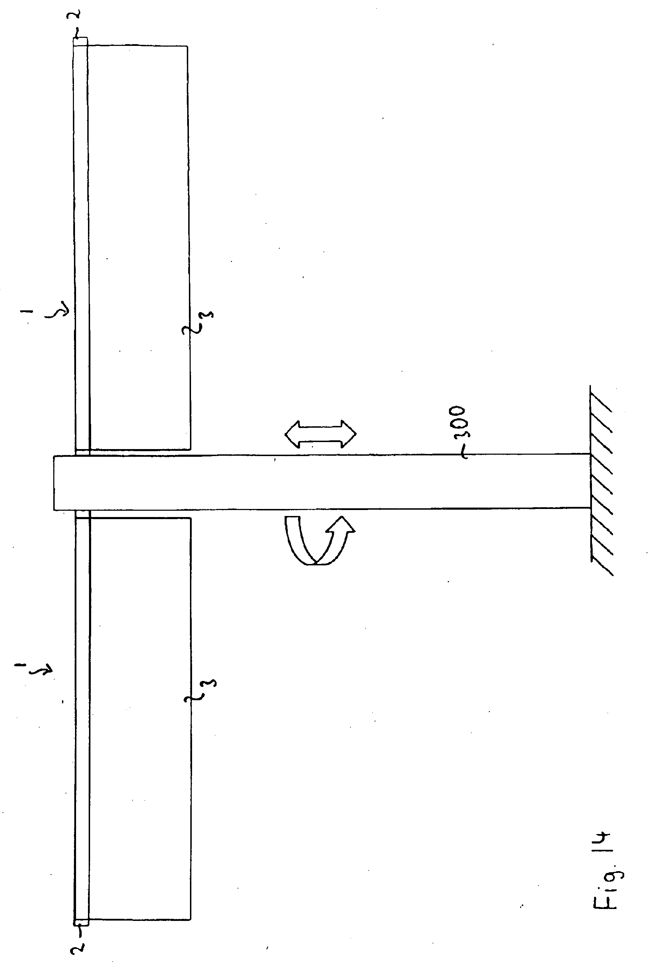

In Figur 14 ist eine altertiative Ausführung einer Halterungseinrichtung 300 dargestellt, bei der zwei Energiewandlungseinheiten 1, in dieser Darstellung gemäß der ersten Ausführungform, beidseitig an der Halterungseinrichtung 300 angebracht sind. Hier kann unter Umständen sogar eine durchgehende Welle 2 für beide Energiewandlungseinheiten 1 gemeinsam genutzt werden.

Weitere Anordnungen von mehreren Energiewandlungseinheiten 1 an einer gemeinsamen Halterungseinrichtung 300 ableitbar. Insbesondere können auch mehr als zwei Energiewandlungseinheiten angeordnet werden, die dann beispielsweise hintereinander in einer Ebene sitzen können. Hierzu können an der Halterungseinrichtung 300 entsprechende Arme/Verzweigungen zur Halterung angebracht werden.

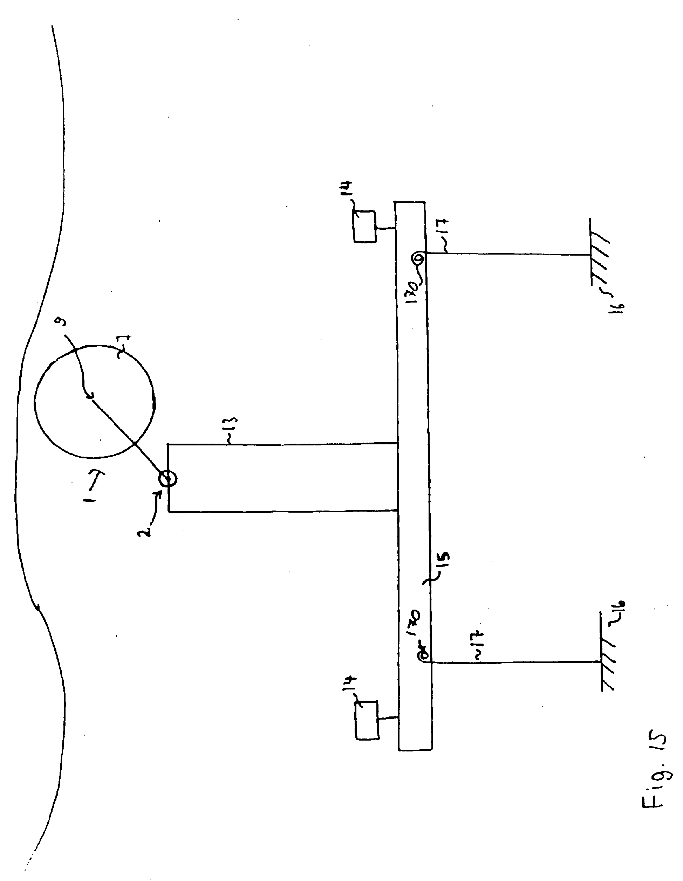

Figur 15 zeigt, wie eine erfindungsgemäße Energiewandlungseinrichtung 1 gemäß der achten Ausführungsform am Meeresboden befestigt wird. Die Energiewandlungseinrichtung 1 ist an der ersten Achse 2 über ein Podest 13 an einer Plattform 15 befestigt. An dieser Plattform 15 sind Schwimmkörper 14 angebracht, die jeweils die Plattform 15 nach oben ziehen. Zudem sind zwischen der Plattform 15 und dem Meeresboden 16 Taue/Ketten 17 angebracht, die dafür sorgen, dass eine bestimmte Höhe in Bezug auf den Meeresboden 16 eingehalten wird. Die Taue/Ketten 17 enthalten eine obere Befestigung zur Befestigung des Taus/der Kette an der Plattform 15 und eine untere Befestigung zur Befestigung am Meeresboden, beispielsweise Anker. Die Verankerung mit den Tauen/Ketten 17 wird auch als "Slack Mooring" bezeichnet, da die Vertauung so locker ist, so dass sich die Plattform 15 in gewissem Maße noch im Meer bewegen kann. In der Plattform sind zwei Verstellvorrichtungen 170 vorgesehen, auf die die Taue/Ketten 17 aufgewickelt werden können Damit wird der Abstand zwischen der Energiewandlungseinrichtung 1 und dem Meeresboden eingestellt. Alternativ ist insbesondere aller auch eine Einstellung des Abstands zum Meeresboden über die Schwimmkörper 14 möglich. Dazu wird der Auftrieb der Schwimmkörper z.B. durch Veränderung einer Gasfüllmenge vaniert.

Dies kann insbesondere dazu genutzt werden, um besonders große und energiereiche Wel - len bei Stürmen unbeschadet zu überstehen, indem das Gesamtsystem dann abgesenkt wird. Die Wellenhöhe hängt direkt mit der Wellenlänge zusammen und ist auch mit der Ausbreitungsgeschwindigkeit gekoppelt. Damit ist es relativ leicht möglich, diese Parameter zu bestimmen. Dies kann beispielsweise mit Hilfe von über der Anlage verteilten Drucksensoren geschehen.

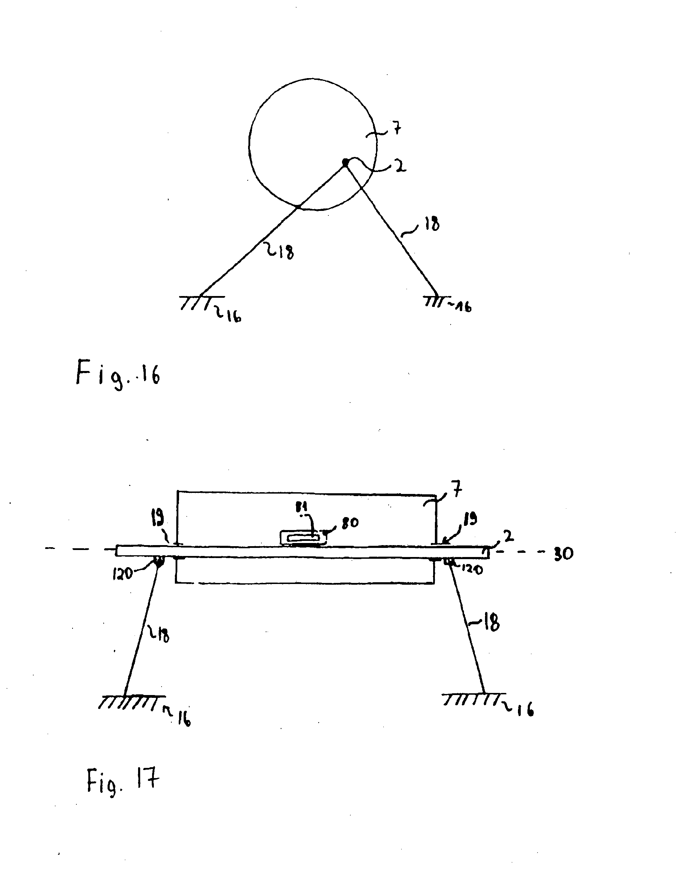

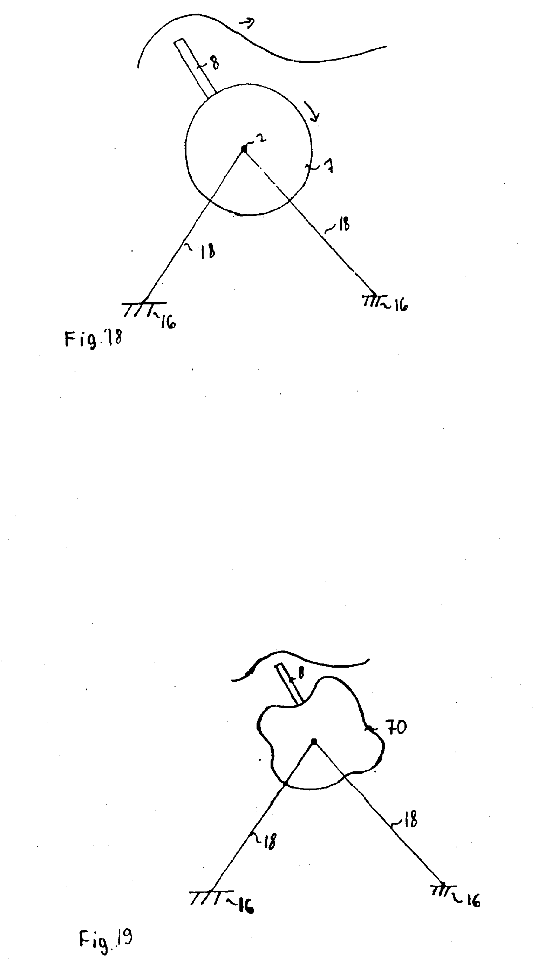

Die Figuren 16 bis 19 zeigen andere Energiewandlungseinrichtungen, welche ähnlich zu den Energiewandlungseinrichtungen gemäß den Figuren 1 bis 6 lediglich dem besseren Verständnis der Erfindung dienen.

Figur 17 zeigt die gleiche Energiewandlungseinrichtung wie in Figur 16 in einer um 90° gedrehten Schnittansicht. Die Achse 2 ist über eine Befestigungsvorrichtung 120 fest mit den Tauen/Ketten 18 verbunden und der Zylinder 7 läuft um die Achse 2 herum.

Im Zylinder 7 ist eine Energiewandlungsmaschine 80, z.B, ein Generator zum Erzeugen elektrischer Energie vorgesehen.

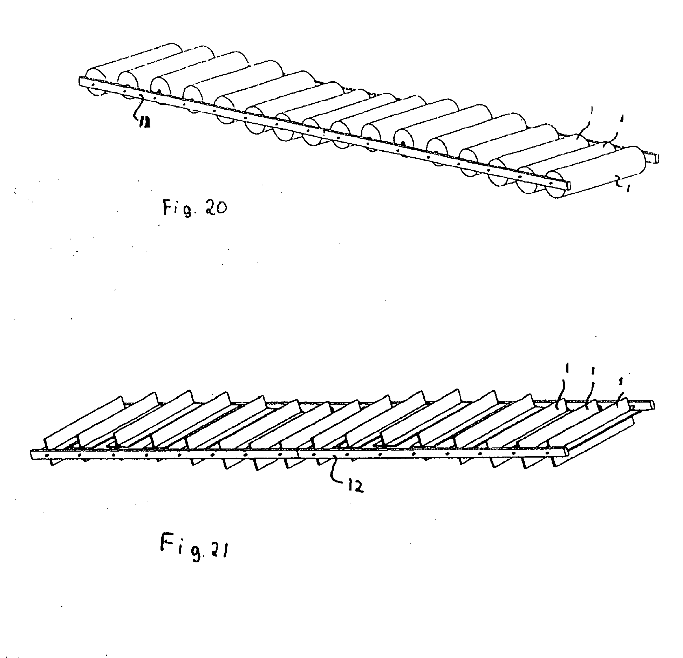

Figur 20 zeigt eine erfindungsgemäße Baugruppe aus einer Aufhängung 12 und einer Vielzahl von Energiewandiungseinrichtungen 1. Die Aufhängung 12, die auch als Gehäuse bezeichnet wird, enthält zwei Träger, zwischen denen sich die Energiewandiungseinrichtungen 1 erstrecken. Die Wellen 2 der Energiewandlungseinhchtungen 1 sind an ihren beiden Enden jeweils mit einem der Träger der Aufhängung 12 verbunden bzw. in diesem drehbar gelagert. Die Energiewandlungseirichtungen 1 dieser Darstellung entsprechen jeweils der zehnten Ausführungsform. Es können aber auch alle anderen Ausführungsformen verwendet werden

Figur 21 zeigt die gleiche Aufhängung, bei der allerdings die Energiewandlungseinrichtungen 1 jeweils der neunten Ausführungsform entsprechend.

Zusätzlich zu der in Figur 20 und 21 gezeigten Aufhängung können noch Querverstrebungen zur Gehäusestabilisierung sowie weitere Systeme wie Antriebstrang, Getriebe, Generatoren und/oder Pumpen an der Aufhängung 12 vorgesehen werden. In den Figuren 20 und 21 ist gut zu erkennen, dass die verschiedenen Zylinder bzw. Flügel unterschiedliche Phasenlagen haben, die sich aus ihren Positionen relativ zur Phasenlage der Meereswelle ergeben. Das System wird hierbei in Längsrichtung von den Meereswellen überströmt.

Mehrere Energiewandlungseinrichtungen 1 werden damit in einem gemeinsamen Gehäuse angeordnet. Dadurch können die Gesamtkosten deutlich gesenkt werden, so dass sich ein System gestalten lässt, das selbst-referenzierend unter der Wasseroberfläche schwimmt und beispielsweise nur mit einem, nicht dargestellten, so genannten "Slack Mooring" am Meeresgrund befestigt wird. Des Weiteren wird es dadurch möglich, dass ein Generator für mehrere Getriebestränge gemeinsam verwendet wird. Zudem ist der Gesamtenergieausstoß eines derartigen Systems entsprechend der Anzahl der im Gesamtsystem integrierten Energiewandlungseinrichtungen 1 größer, was auch die relativen Kosten der Energieabführung, beispielsweise mit Hilfe eines Stromkabels, senkt.

Mehrere derartige Gesamtsysteme können auch unabhängig voneinander oder gekoppelt nebeneinander angeordnet werden, was die relativen Kosten der Energieabführung weiter senkt. Bei einer Kopplung kann zusätzlich die Anzahl der Träger verringert werden.

In einer Ausführungsform wird das Gehäuse mit Hilfe einer Ausrichtungsvorrichtung automatisch so ausgerichtet, dass die Wellen die ersten Körper der Energiewandiungseinrichtungen immer aus der optimale Richtung abströmen. Prinzipiell sollte sich das System jedoch selbstständig korrekt zur Wellenausbreitung ausrichten, wenn das Mooring-System am vorderen Ende des Systems angreift

Der Abstand in Längsrichtung von nebeneinander liegenden Energiewandlungseinrichtungen 1 wird so gewählt, dass ein ausreichendes Umspülen sichergestellt wird. Es ist zu erwarten, dass die Wellenhöhe nach mehreren Energiewandlungseinrichtungen 1 abnimmt, so dass eine hinten gelegene Energiewandlungseinrichtung 1 weniger Wellenenergie als eine vordere empfängt. Dies wird zu einem gewissen Teil dadurch ausgeglichen, dass sich Wellenkämme hinter Objekten wieder schließen. Die zu den Seiten der Mehrfachaufhängung laufende Welle würde dann kontinuierlich Energie in das System nachliefern. Vorteilhaft ist es deswegen, die Träger der Aufhängung nicht zu massiv auszuführen, was zum einen Materialkosten spart, zum anderen insbesondere aber auch einen derartigen Energietransfer zu den Energiewandtungssinheiten 1 erleichtert

Da die Energiewandlungseinrichtungen 1 durch ihre Abmessung auf eine bestimmte Wellenhöhe hin optimiert sind, kann es vorteilhaft sein, die hinteren Energieumwandfungseinheiten entsprechend kleiner aufzulegen. Alternativ ist es auch denkbar, das Gesamtsystem gleich gekippt ins Wasser zu stellen, so dass die vorderen Energiewandlungseinrichtungen 1 etwas tiefer im Wasser liegen als die hinteren. Da der Durchmesser der Orbitalbewegung mit zunehmender Wassertiefe abnimmt, würde die vordere Energiewandiungseinrichtung 1, die die ungedämpfte Welle sieht, durch den gleichen orbitalen Durchmesser angeregt wie die hintere Energiewandtungseinrichtung 1, die zwar bereits von einer gedämpften Welle angeregt wird, dafür aber die größeren Orbitale nahe der Oberfläche sieht

Alternativ ist auch die Bestimmung der Phasenlage der Rotoren zueinander denkbar. Es kann aber auch die Gesamtleistungsausgabe der Anlage gemessen werden. Überschreitet diese einen definierten Wert, kann die Maschine zum Schutz abtauchen.

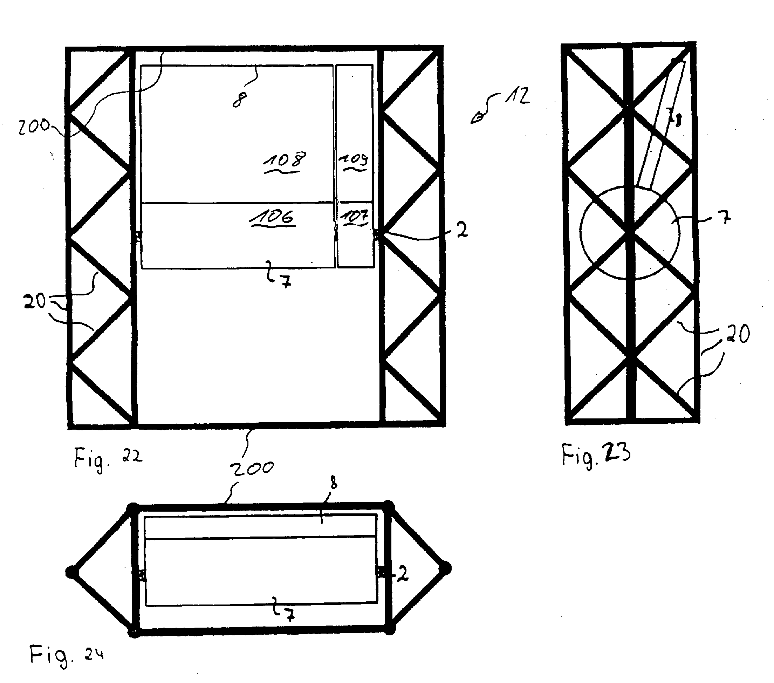

Die Figuren 22 bis 26 zeigen weitere Gehäuse für die Energiewandtungseinrichtungen.

Figur 22 zeigt ein Modul mit einer Aufhängung 12, die aus einer Vielzahl von Metallverstrebungen 20 besteht. Diese sind rechts und links der Energiewandlungseinrichtung 1 angebracht. Querstreben 200 sorgen für zusätzliche Stabilität.

Figur 23 zeigt das Modul aus Figur 22 in der Seitenansicht mit Blick auf die Welle 2.

Figur 24 zeigt ebenfalls das Modul aus Figur 22 in einer weiteren Seitenansicht, wobei die erste Achse 30 längs von links nach rechts verläuft.

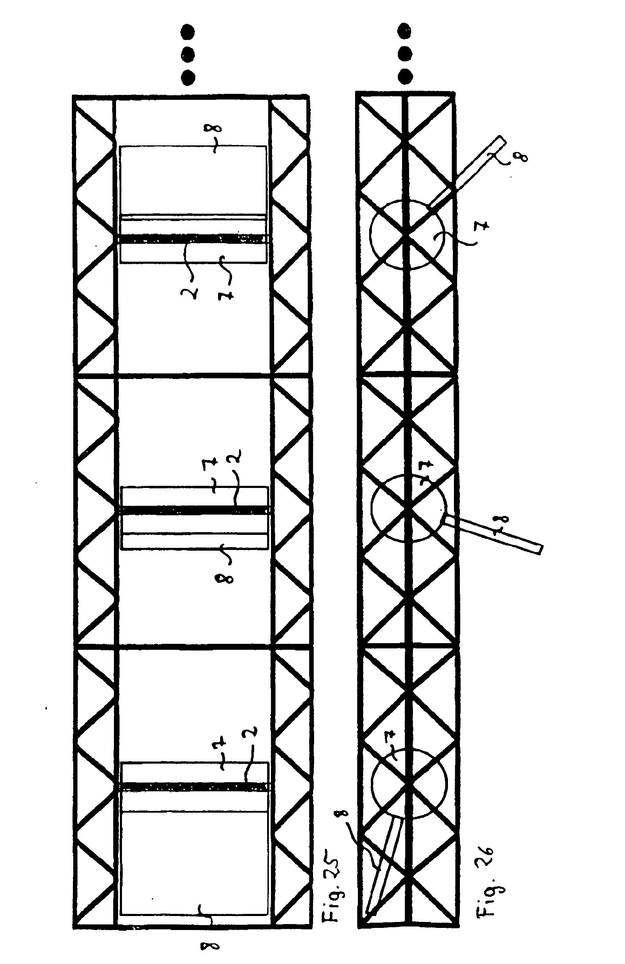

Figur 25 zeigt, wie eine Vielzahl von Moduln gemäß Figur 22 aneinander montiert sind, um ein gemeinsames Gehäuse bereitzustellen.

Figur 26 zeigt die Baugruppen aus Figur 25 in einer Seitenansicht.

Eine wesentliche Herausforderung ist die im Wesentlichen ortsfeste Halterung der ersten Welle/Achse 2, da diese ansonsten durch die Orbitalbewegung der Wassermoleküle ebenfalls auf eine Kreisbahn gezwungen wurde. Damit entfiele die Relativbewegung des ersten Körpers zu der Achse/Welle 2. Die Energiewandlungseinheit 1 würde nicht funktionieren.

Besonders bei hohen Wassertiefen ist es aufwändig und teuer, eine Halterung für nur eine Energiewandlungseinrichtung bereit zu stellen, die diese nahezu ortsfeste Halterung der Achse/Welle 2 sicherstellt. Deswegen ist es besonders vorteilhaft, mehrere Energiewandlungseinrichtungen miteinander in einem gemeinsamen Gehäuse zu befestigen. Ein solches selbst-referenzierendes System erstreckt sich in Wellenausbreitungsrichtung und ist mit Hilfe von Schwimmhilfen derart ausgelegt, dass es unterhalb der Wasseroberfläche schwebt. Die Befestigung am Grund kann beispielsweise mit einem Slack-Mooring erfolgen.

Alternativ ist auch eine auf der Wasseroberfläche schwimmende Trägerstruktur mit entsprechenden Verlängerungen in das Wasser hinein möglich, an denen die Energiewandlungseinheiten angebracht sind.

Durch eine entsprechende Ausdehnung des Systems über idealerweise mindestens zwei Wellenlängen, dies entspricht ca. 400 bis 500 m, ergibt sich ein ruhender Träger, der nicht von den Wellenhüben beeinflusst wird. Die auftretenden Kräfte und Drehmomente heben sich gegenseitig auf. Jedoch ist auch bereits bei deutlich kleineren Strukturen von z.B. ¾ einer Wellenlänge ein weitgehend ruhendes System möglich.

Durch die gezeigte Aufbauform des Trägersystems aus Modulen ist eine Fertigung großer Strukturen möglich.

Da die Abmessung der Energiewandlungseinheiten an den Wellenhub und damit an die Orbitalbewegung der Wassermoleküle angepasst ist, ergibt sich durch die Anpassung der Tauchtiefe eine besondere, effiziente Form der Anpassung an geänderte Betriebsbedingungen. Dies resultiert aus stark abnehmendem Durchmesser der Orbitalbewegung mit zunehmender Wassertiefe.

Die Phasenlage der Rotoren zu den Wellen könnte ebenfalls über die Drucksensoren ausgewertet werden. Alternativ ist auch die Verwendung von Referenzrotoren denkbar, die drehmomentfrei gelagert sind. Die relative Lage kann dann beispielsweise mit Beschleunigungssensoren relativ leicht aufgewertet werden.

Die Energiewandlungseinheiten der Figuren 22 bis 26 entsprechen dem Ausführungsbeispiel fünf. In Figur 22 ist zudem eine nicht von der Erfindung umfasste Unterteilung des Zylinders 7 und des Flügels 8 in einen linken 106. 108 und einen rechten Bereich 107. 109 dargestellt. Mit einer derartigen Unterteilung ist es möglich, eine Überwachung der Phasenlage des Rotors relativ zur Welle zu erreichen, wenn der eine Teil des Rotors drehmomentenfrei gelagert ist. Alternativ ist auch eine Unterteilung des Rotors in n unabhängig Segmente möglich, die jedoch alle über einen entsprechenden Mechanismus ein Drehmoment übertragen können, Ein derartig segmentierte Rotor bietet Vorteile in Bezug auf eine schräge Anströmung der Energiewandlungseinrichtung.

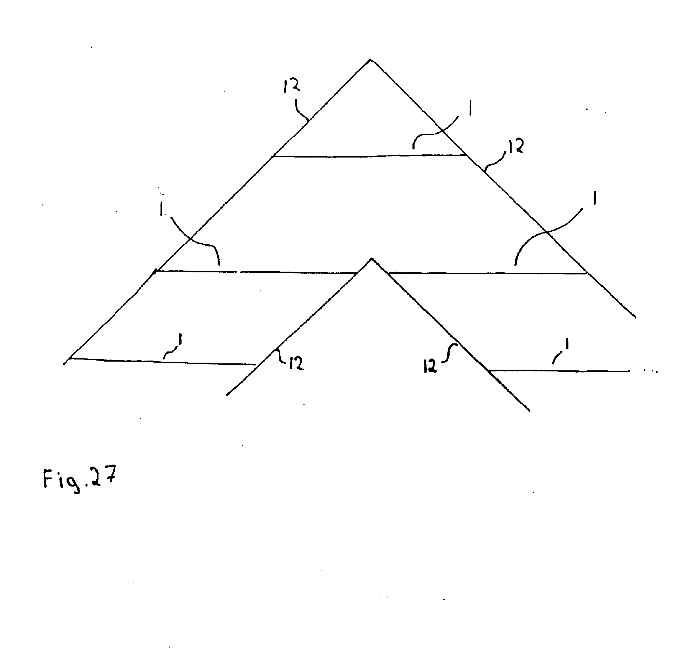

Um eine Abschattung von hintereinander angeordneten Modulen zu vermeiden, sind auch andere Anordnungen möglich. Es ist bekannt, dass Wasserwellen nach einem Hindernis wieder zusammenlaufen. Aber bei Strukturen mit einer Gesamtlänge von mehreren 100 m kann es trotzdem dazu kommen, dass die hinteren Rotoren mit deutlich verringerten Wellenhüben beaufschlagt werden. Zur Vermeidung dieser Effekte werden auch die Anordnung gemäß der Figuren 27 vorgestellt.

Figur 27 zeigt eine weitere alternative Anordnung von Energieumwandlungseinheiten 1 in einer Aufhängung. Die Aufhängung weist eine V-Form auf und in den Flügeln des V sind jeweils Energieumwandlungseinheiten 1 untergebracht.

Die vorangehend beschriebenen Ausführungsbeispiele und Figuren dienen lediglich dem besseren Verständnis der vorliegenden Erfindung, sie schränken die Erfindung nicht etwa auf die Ausführungsbeispiele ein. Die Figuren sind teilweise grob schematisch gehalten, der Effekt bzw. die Auswirkungen zum Teil deutlich vergrößert bzw. übertrieben dargestellt, um die Funktionsweisen, Wirkprinzipien, technischen Ausgestaltungen und Merkmale zu verdeutlichen. Grundsätzlich kann jede Funktionsweise, jedes Prinzip, jede technische Ausgestaltung und jedes Merkmal, welches/welche in den Figuren oder im Text gezeigt ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem Offenbarungsumfang der Erfindung hinzuzurechnen sind. Dabei sind auch Kombinationen zwischen allen einzelnen Ausführungen im Text, d.h. in jedem Anschnitt des Beschreibungstexts, in den Ansprüchen und auch Kombinationen zwischen verschiedenen Ausführungsbeispielen im Text, in den Ansprüchen und in den Figuren umfasst.

Auch die Ansprüche begrenzen bzw, limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen der Erfindung von dieser Offenbarung umfasst.

### Bezugszeichenliste

- 1: Energiewandlungseinrichtung
- 2: Welse
- 3: Flügel
- 4: ausgespartes Brett
- 5: Zylinder
- 6: Zylinder
- 7: Zylinder
- 8: Flügel
- 9: Welle
- 11: Flügel
- 12: Aufhängung
- 13: Podest
- 14: Schwimmkörper
- 15: Plattform bzw. Plateau
- 16: Meeresboden bzw. Meeresgrund
- 17: Tau
- 18: Tau
- 20: Streben
- 22: Welle
- 30: Achse
- 31: Achse
- 35: Hebelarm
- 80: Generator
- 81: Rotor
- 106: Zylinder
- 107: Zylinder
- 108: Flügel
- 109: Flügel
- 110: Verlängerungsvorrichtung
- 120: Befestigungsvorrichtung
- 170: Verstellvorrichtung
- 200: Querstreben

## Patentansprüche

1. Energiewandlungseinrichtung zur Umwandlung von Energie zwischen einer Wellenbewegung in einem Fluid und einer anderen Energieform, umfassend:
mindestens einen im Fluid angeordneten Kopplungskörper (3, 7), welcher dazu eingerichtet ist an zumindest eine Komponente einer der Wellenbewegung des Fluids zugeordneten Orbitalströmungsbewegung zu koppeln, und eine Führungseinrichtung (2, 35), die eine geführte, endlos umlaufende Orbitalbewegung und/oder Drehbewegung des mindestens einen Kopplungskörpers (3, 7) vorgibt,
wobei die Führungseinrichtung (2, 35) einen Abtrieb aufweist, an dem sie die Umlaufbewegung und/oder die Drehbewegung in ein Drehmoment umsetztwobei der Kopplungskörper (3, 7) und die Führungseinrichtung (2) konstruktiv so gestaltet sind, dass im Verlauf einer Periode der Wellenbewegung der Kopplungskörper (3, 7) im Wesentlichen einen vollständigen Umlauf der Orbitalbewegung und/oder Drehbewegung ausführt, wobei die Führungseinrichtung (2, 35) eine Kurbel umfasst, welche den Kopplungskörper (3, 7) um die Bewegungsachse führt, **dadurch gekennzeichnet, dass** der Kopplungskörper (3, 7) drehbar auf der Führungseinrichtung (2, 35) gelagert ist.

2. Energiewandlungseinrichtung nach Anspruch 1,
**dadurch gekennzeichnet, dass** der Abtrieb eine Abtriebswelle (2) umfasst, an der eine Energiewandlungsmaschine, insbesondere ein Generator, insbesondere ein hydromechanische Maschine, insbesondere eine Pumpe, - insbesondere mittels eines Getriebes - angekoppelt sind.

3. Energiewandlungseinrichtung nach einem der Ansprüche 1 oder 2, **dadurch gekennzeichnet, dass** die Führungseinrichtung (2, 35) die Umlaufbewegung und/oder die Drehbewegung um eine im Wesentlichen horizontal ausgerichtete Bewegungsachse (30) führt.

4. Energiewandlungseinrichtung nach einem der Ansprüche 1 bis 3, **dadurch gekennzeichnet, dass** der Kopplungskörper (3, 7) und/oder die Führungseinrichtung (2, 35) bei einer vorgegebenen Umlaufstellung ihre räumliche hauptsächliche Ausdehnung im Wesentlichen auf einer Seite einer Ebene, in der die Bewegungsachse (30) verläuft, besitzt, wobei der Kopplungskörper (3, 7) und/oder die Führungseinrichtung (2, 35) insbesondere exzentrisch bezüglich der Bewegungsachse gestaltet sind.

5. Energiewandlungseinrichtung nach Anspruch 1, **dadurch gekennzeichnet, dass** ein Hebelarm (35) des Kurbelgetriebes eine Längenverstelleinrichtung (110) umfasst, durch welche der Hebelarm (35) in seiner wirksamen Länge verstellbar ist.

6. Energiewandlungseinrichtung nach Anspruch 5, **dadurch gekennzeichnet, dass** eine Steuerung vorhanden ist, mit welcher die Länge des Hebelarms (35) an eine räumliche Ausdehnung der Orbitalströmungsbewegung im Fluid anpassbar ist und/oder mit welcher die Länge des Hebelarms während des Umlaufs an eine Bahnform der Orbitalströmungsbewegung im Fluid - insbesondere eine Elliptizität - anpassbar ist.

7. Energiewandlungseinrichtung nach einem der Ansprüche 1 bis 6, **dadurch gekennzeichnet, dass** eine Ausrichtevorrichtung vorhanden ist, die den Kopplungskörper in einer vorgegebenen Winkellage seiner Drehachse in einem ortsfesten Koordinatensystems ausrichtet.

8. Energiewandlungseinrichtung nach einem der Ansprüche 1 bis 7, **dadurch gekennzeichnet, dass** der Kopplungskörper (3, 7) nach Art eines senkrecht zu seiner Drehachse angeströmten Rotors, und/oder nach Art eines Rotors, der eine senkrecht zu seiner Drehachse ausgerichtete Anströmung unabhängig vom Anströmungswinkel in Rotationsbewegung umsetzt, gestaltet ist.

9. Energiewandlungseinrichtung nach Anspruch 8, **dadurch gekennzeichnet, dass** der Rotor zu der Klasse der Widerstandsläufer, der Auftriebsläufer und/oder einer Kombination der beiden gehört.

10. Energiewandlungseinrichtung nach einem der Ansprüche 8 bis 9, **dadurch gekennzeichnet, dass** der Kopplungskörper als einflügeliger Rotor gestaltet ist.

11. Energiewandlungseinrichtung nach einem der Ansprüche 8 bis 10, **dadurch gekennzeichnet, dass** eine maximale radiale Ausdehnung des Rotor in etwa einem Radius der Orbitalströmungsbewegung im Fluid am Standort der Energiewandlungseinrichtung entspricht oder kleiner als der besagte Radius ist.

12. Energiewandlungseinrichtung nach einem der Ansprüche 1 bis 11, **dadurch gekennzeichnet, dass** der Kopplungskörper (3, 7) im Wesentlichen die gleiche mittlere Dichte wie das Fluid besitzt, wobei der Kopplungskörper insbesondere eine mittlere Dichte im Bereich zwischen 900 kg/m3 und 1.100 kg/m3 aufweist.

13. Energiewandlungseinrichtung nach einem der Ansprüche 1 bis 12, **dadurch gekennzeichnet, dass** eine Trägerstruktur (12) vorhanden ist, an welcher sich die Führungseinrichtung (2, 35) abstützt.

14. Energiewandlungseinrichtung nach Anspruch 13, **dadurch gekennzeichnet, dass** die Trägerstruktur (12) am Meeresboden - insbesondere über eine Dämpfungseinrichtung - verankert ist.

15. Energiewandlungseinrichtung nach Anspruch 13 oder 14, **dadurch gekennzeichnet, dass** die Trägerstruktur Auftriebskörper besitzt, durch welche die Trägerstruktur (12) schwimmfähig ist, insbesondere wobei die Trägerstruktur (12) nach Art eines Slack Moorings verankert ist.

16. Energiewandlungseinrichtung nach einem der Ansprüche 13 bis 15, **dadurch gekennzeichnet, dass** die Trägerstruktur (12) und/oder eine Haltevorrichtung der Führungseinrichtung an der Trägerstruktur hinsichtlich einer Eintauschtiefe verstellbar sind.

17. Energiewandlungseinrichtung nach einem der Ansprüche 13 bis 15, **dadurch gekennzeichnet, dass** an einer Trägerstruktur (12) mehrere Kopplungskörper (3, 7) über entsprechende Führungseinrichtungen (2, 35) angeordnet sind.

18. Energiewandlungseinrichtung nach Anspruch 17, **dadurch gekennzeichnet, dass** mehrere Kopplungskörper (3, 7) linear hintereinander, insbesondere parallel, angeordnet sind und/oder dass mehrere Kopplungskörper (3, 7) im Wesentlichen parallel mit seitlichem Versatz bezüglich ihrer Längsachse oder Bewegungsachse, insbesondere in Dreiecksformation, Dreiecksflächenformation oder in V-Formation angeordnet sind.

19. Energiewandlungseinrichtung nach einem der Ansprüche 13 bis 18, **dadurch gekennzeichnet, dass** die Trägerstruktur (12) über eine passive oder aktive Azimuthausrichteanordnung entlang einer Wellenrichtung ausrichtbar ist.

20. Energiewandlungseinrichtung nach Anspruch 16, **dadurch gekennzeichnet, dass** eine Steuerung vorhanden ist, welche den Energieertrag durch eine Änderung der Eintauchtiefe steuert.

## Claims

1. Power converting device for converting energy between a wave movement in a fluid and another form of energy, comprising:
at least one coupling element (3, 7) which is arranged in the fluid and is equipped to couple to at least one component of an orbital flow movement assigned to the wave movement of the fluid, and a guide device (2, 35), which predefines a guided, endlessly revolving orbital movement and/or rotational movement of the at least one coupling element (3, 7), the guide device (2, 35) having an output drive, at which it converts the revolving movement and/or the rotational movement into a torque, the coupling element (3, 7) and the guide device (2) being configured constructionally so that, in the course of one period of the wave movement, the coupling element (3, 7) executes substantially a complete revolution of the orbital movement and/or rotational movement, the guide device (2, 35) comprising a crank which guides the coupling element (3, 7) about the axis of movement,
**characterized in that** the coupling element (3, 7) is rotatably mounted on the guide device (2, 35).

2. Power converting device according to Claim 1, **characterized in that** the output drive comprises an output drive shaft (2), to which a power conversion machine, in particular a generator, in particular a hydromechanical machine, in particular a pump, is coupled - in particular by means of a gearbox.

3. Power converting device according to either of Claims 1 and 2,
**characterized in that** the guide device (2, 35) guides the revolving movement and/or the rotational movement about a substantially horizontally aligned movement axis (30).

4. Power converting device according to one of Claims 1 to 3,
**characterized in that**, at a predefined revolution position, the coupling element (3, 7) and/or the guide device (2, 35) has its primary physical extent substantially on one side of a plane in which the movement axis (30) extends, the guide element (3, 7) and/or the guide device (2, 35) being configured in particular eccentrically with respect to the movement axis.

5. Power converting device according to Claim 1,
**characterized in that** a lever arm (35) of the crank mechanism comprises a length adjusting device (110), by means of which the effective length of the lever arm (35) can be adjusted.

6. Power converting device according to Claim 5,
**characterized in that** there is a control system, with which the length of the lever arm (35) can be matched to a physical extent of the orbital flow movement in the fluid, and/or with which, during the revolution, the length of the lever arm can be matched to an orbit of the orbital flow movement in the fluid - in particular an ellipticity.

7. Power converting device according to one of Claims 1 to 6,
**characterized in that** there is an alignment device, which aligns the coupling element in a predefined angular position of its axis of rotation in a stationary coordinate system.

8. Power converting device according to one of Claims 1 to 7,
**characterized in that** the coupling element (3, 7) is configured in the manner of a rotor with inflow perpendicular to its axis of rotation, and/or in the manner of a rotor which converts an inflow aligned perpendicular to its axis of rotation into rotational movement, irrespective of the inflow angle.

9. Power converting device according to Claim 8,
**characterized in that** the rotor belongs to the class of resistance rotors, updraft rotors and/or a combination of the two.

10. Power converting device according to either of Claims 8 and 9,
**characterized in that** the coupling element is configured as a single-vane rotor.

11. Power converting device according to one of Claims 8 to 10,
**characterized in that** a maximum radial extent of the rotor corresponds approximately to a radius of the orbital flow movement in the fluid at the location of the power converting device or is smaller than the said radius.

12. Power converting device according to one of Claims 1 to 11,
**characterized in that** the coupling element (3, 7) has substantially the same average density as the fluid, the coupling element in particular having an average density in the range between 900 kg/m³ and 1100 kg/m³.

13. Power converting device according to one of Claims 1 to 12,
**characterized in that** there is a supporting structure (12), on which the guide device (2, 35) is supported.

14. Power converting device according to Claim 13, **characterized in that** the supporting structure (12) is anchored on the bottom of the sea - in particular via a damping device.

15. Power converting device according to Claim 13 or 14,
**characterized in that** the supporting structure has buoyancy elements, as a result of which the supporting structure (12) is capable of floating, in particular the supporting structure (12) can be anchored in the manner of a slack mooring.

16. Power converting device according to one of Claims 13 to 15,
**characterized in that** the supporting structure (12) and/or a holding device of the guide device can be adjusted on the supporting structure with regard to an immersion depth.

17. Power converting device according to one of Claims 13 to 15,
**characterized in that** a plurality of coupling elements (3, 7) are arranged on a supporting structure (12) via appropriate guide devices (2, 35).

18. Power converting device according to Claim 17,
**characterized in that** a plurality of coupling elements (3, 7) are arranged linearly behind one another, in particular in parallel, and/or **in that** a plurality of coupling elements (3, 7) are arranged substantially in parallel with a lateral offset with respect to their longitudinal axis or movement axis, in particular in triangular formation, triangular surface formation or V formation.

19. Power converting device according to one of Claims 13 to 18,
**characterized in that** the supporting structure (12) can be aligned along a wave direction via a passive or active azimuth aligning arrangement.

20. Power converting device according to Claim 16,
**characterized in that** there is a control system, which controls the energy yield by means of a change in the immersion depth.

## Revendications

1. Dispositif de conversion d'énergie pour convertir de l'énergie entre un mouvement d'onde dans un fluide et une autre forme d'énergie, comprenant :
au moins un corps d'accouplement (3, 7) disposé dans le fluide, lequel est prévu pour s'accoupler à au moins une composante d'un mouvement d'écoulement orbital associé au mouvement d'onde du fluide, et
un dispositif de guidage (2, 35) qui prédéfinit un mouvement orbital et/ou un mouvement de rotation guidé, tournant sans fin, de l'au moins un corps d'accouplement (3, 7), le dispositif de guidage (2, 35) présentant une prise de force au niveau de laquelle il convertit le mouvement périphérique et/ou le mouvement de rotation en un couple, le corps d'accouplement (3, 7) et le dispositif de guidage (2) étant construits de telle sorte qu'au cours d'une période du mouvement d'onde, le corps d'accouplement (3, 7) effectue essentiellement un tour complet du mouvement orbital et/ou du mouvement de rotation, le dispositif de guidage (2, 35) comprenant une manivelle qui guide le corps d'accouplement (3, 7) autour de l'axe de déplacement, **caractérisé en ce que** le corps d'accouplement (3, 7) est supporté de manière rotative sur le dispositif de guidage (2, 35).

2. Dispositif de conversion d'énergie selon la revendication 1,
**caractérisé en ce que** la prise de force comprend un arbre de prise de force (2) auquel est accouplée une machine de conversion d'énergie, en particulier un générateur, en particulier une machine hydromécanique, en particulier une pompe - notamment au moyen d'une transmission.

3. Dispositif de conversion d'énergie selon l'une quelconque des revendications 1 ou 2, **caractérisé en ce que** le dispositif de guidage (2, 35) guide le mouvement périphérique et/ou le mouvement de rotation autour d'un axe de déplacement (30) orienté essentiellement horizontalement.

4. Dispositif de conversion d'énergie selon l'une quelconque des revendications 1 à 3, **caractérisé en ce que** le corps d'accouplement (3, 7) et/ou le dispositif de guidage (2, 35), dans une position de rotation prédéfinie, possèdent leur étendue principale spatiale essentiellement d'un côté d'un plan dans lequel s'étend l'axe de déplacement (30), le corps d'accouplement (3, 7) et/ou le dispositif de guidage (2, 35) étant notamment configurés de manière excentrique par rapport à l'axe de déplacement.

5. Dispositif de conversion d'énergie selon la revendication 1, **caractérisé en ce qu'**un bras de levier (35) de la transmission à manivelle comprend un dispositif de réglage longitudinal (110) qui permet de régler la longueur efficace du bras de levier (35).

6. Dispositif de conversion d'énergie selon la revendication 5, **caractérisé en ce qu'**il est prévu une commande avec laquelle la longueur du bras de levier (35) peut être adaptée à une étendue spatiale du mouvement d'écoulement orbital dans le fluide et/ou avec laquelle la longueur du bras de levier pendant la rotation peut être adaptée à une forme de trajectoire du mouvement d'écoulement orbital dans le fluide - notamment une forme elliptique.

7. Dispositif de conversion d'énergie selon l'une quelconque des revendications 1 à 6, **caractérisé en ce qu'**il est prévu un dispositif d'orientation qui oriente le corps d'accouplement dans une position angulaire prédéfinie de son axe de rotation dans un système de coordonnées fixe.

8. Dispositif de conversion d'énergie selon l'une quelconque des revendications 1 à 7, **caractérisé en ce que** le corps d'accouplement (3, 7) est configuré à la manière d'un rotor dont l'afflux est orienté perpendiculairement à son axe de rotation, et/ou à la manière d'un rotor qui convertit un écoulement d'afflux orienté perpendiculairement à son axe de rotation, indépendamment de l'angle d'afflux, en un mouvement de rotation.

9. Dispositif de conversion d'énergie selon la revendication 8, **caractérisé en ce que** le rotor appartient à la classe des rotors à résistance, des rotors à poussée sustentatrice et/ou à une combinaison de ceux-ci.

10. Dispositif de conversion d'énergie selon l'une quelconque des revendications 8 et 9, **caractérisé en ce que** le corps d'accouplement est configuré sous forme de rotor à une pale.

11. Dispositif de conversion d'énergie selon l'une quelconque des revendications 8 à 10, **caractérisé en ce qu'**une étendue radiale maximale du rotor correspond approximativement à un rayon du mouvement d'écoulement orbital dans le fluide à l'endroit du dispositif de conversion d'énergie ou est inférieure audit rayon.

12. Dispositif de conversion d'énergie selon l'une quelconque des revendications 1 à 11, **caractérisé en ce que** le corps d'accouplement (3, 7) possède essentiellement la même densité moyenne que le fluide, le corps d'accouplement présentant notamment une densité moyenne comprise dans la plage de 900 kg/m³ à 1100 kg/m³.

13. Dispositif de conversion d'énergie selon l'une quelconque des revendications 1 à 12, **caractérisé en ce qu'**une structure porteuse (12) est prévue, sur laquelle s'appuie le dispositif de guidage (2, 35).

14. Dispositif de conversion d'énergie selon la revendication 13, **caractérisé en ce que** la structure porteuse (12) est ancrée au fond de la mer - en particulier par le biais d'un dispositif d'amortissement.

15. Dispositif de conversion d'énergie selon la revendication 13 ou 14, **caractérisé en ce que** la structure porteuse possède des corps de sustentation qui permettent de faire flotter la structure porteuse (12), en particulier la structure porteuse (12) étant ancrée à la manière d'un amarrage à tension variable.

16. Dispositif de conversion d'énergie selon l'une quelconque des revendications 13 à 15, **caractérisé en ce que** la structure porteuse (12) et/ou un dispositif de fixation du dispositif de guidage sur la structure porteuse peuvent être réglés en termes de leur profondeur d'immersion.

17. Dispositif de conversion d'énergie selon l'une quelconque des revendications 13 à 15, **caractérisé en ce que** plusieurs corps d'accouplement (3, 7) sont disposés au niveau d'une structure porteuse (12) par le biais de dispositifs de guidage correspondants (2, 35).

18. Dispositif de conversion d'énergie selon la revendication 17, **caractérisé en ce que** plusieurs corps d'accouplement (3, 7) sont disposés les uns derrière les autres linéairement, en particulier parallèlement, et/ou **en ce que** plusieurs corps d'accouplement (3, 7) sont disposés essentiellement parallèlement avec un décalage latéral par rapport à leur axe longitudinal ou leur axe de déplacement, en particulier suivant une formation en triangle, une formation de surface en triangle ou suivant une formation en V.

19. Dispositif de conversion d'énergie selon l'une quelconque des revendications 13 à 18, **caractérisé en ce que** la structure porteuse (12) peut être orientée par le biais d'un agencement d'orientation azimutal passif ou actif le long d'une direction d'onde.

20. Dispositif de conversion d'énergie selon la revendication 16, **caractérisé en ce qu'**il est prévu une commande qui commande le rendement énergétique par le biais d'une variation de la profondeur d'immersion.
